# EUROPÄISCHE PATENTSCHRIFT

(11) **EP 1 821 438 B1**
(45) Veröffentlichungstag und Bekanntmachung des Hinweises auf die Patenterteilung: **12.08.2009**
(21) Anmeldenummer: 06024454.8
(22) Anmeldetag: 24.11.2006
(51) Int. Cl.: H04J 14/02, H04Q 11/00

(54) **Optische Schaltung zur Realisierung eines Knotens höherer Ordnung in einem optischen Übertragungsnetzwerk**
Optical circuit for implementing a node of higher degree in an optical transmission network
Circuit optique pour la mise en oeuvre d'un noeud de degré supérieur dans un réseau de transmission optique

(30) Priorität: 21.02.2006 DE 102006008404
(43) Veröffentlichungstag der Anmeldung: 22.08.2007
(73) Patentinhaber: Adva AG Optical Networking, 82152 Martinsried (DE)
(72) Erfinder: Eiselt, Michael, Dr.-Ing., 99334 Kirchheim (DE)
(74) Vertreter: Eder, Thomas

(56) Entgegenhaltungen:
- WO-A-20/06005191
- US-A1- 2003 169 961
- US-A1- 2005 276 605

## Beschreibung

Die Erfindung betrifft eine optische Schaltungsstruktur zur Realisierung eines Knotens höherer Ordnung in einem optischen Übertragungsnetzwerk zur Übertragung von optischen Wellenlängenmultiplexsignalen (WDM-Signalen) mit den Merkmalen des Oberbegriffs des Patentanspruchs 1 sowie eine optische Erweiterungsschaltungsstruktur zur Erweiterung einer optischen Schaltungsstruktur zur Realisierung eines Knotens zweiter oder höherer Ordnung zu einer derartigen Schaltungsstruktur mit den Merkmalen des Oberbegriffs des Patentanspruchs 8. Schließlich betrifft die Erfindung eine optische Schaltungsstruktur gemäß Anspruch 13 zur Realisierung eines unterbrechungsfrei erweiterbaren Knotens zweiter Ordnung zu einer derartigen optischen Schaltungsstruktur.

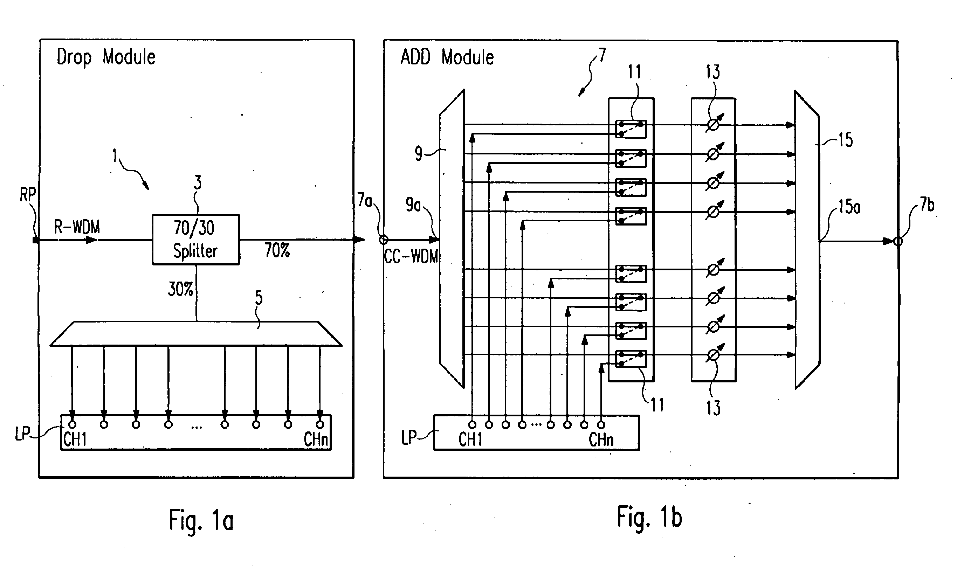

Es ist bekannt, einen Knoten zweiter Ordnung mittels zweier Add-Einheiten und zweier 1:2-Splittereinheiten als Drop-Einheiten zu realisieren. Entsprechende Strukturen sind in Fig. 1b bzw. in Fig. 1a dargestellt. Mittels einer 1:2-Splittereinheit 3 und einer Demultiplexeinheit 5 kann eine Drop-Einheit 1 gemäß Fig. 1a realisiert werden, welcher das einem Remote-Port zugeführte Receive-WDM-Signal (R-WDM) zugeführt wird. Da die Splittereinheit 3 an den Ausgangsports WDM-Signale erzeugt, die dem R-WDM-Signal entsprechen und nur eine geringere optische Leistung aufweisen, ist es möglich eine Broadcast-Funktionalität zu realisieren, d.h. ein Kanal CH1 bis CHn kann sowohl im Knoten gedroppt als auch gleichzeitig an einen anderen Port übertragen werden. An den Kanal-Ausgangsports der Demultiplexeinheit 5 liegen die Signale der einzelnen Kanäle an und können weiter verarbeitet werden. Die Kanal-Ausgangsports bilden dabei zusammen den Ausgangsteil LPout des bidirektionalen Local-Ports LP und führen die vom Local-Port LP abgeführten (Local-Transmit) Signale.

Die in Fig. 1b dargestellte Add-Einheit 7 umfasst eine Demultiplexeinheit 9, eine der Anzahl der Kanäle des betreffenden WDM-Signals entsprechende Anzahl von optischen 2x1-Schaltern 11 und variable optische Dämpfungsglieder 13 sowie eine optische Multiplexeinheit 15.

Ein der Add-Einheit 7 am Eingangsport 7a zugeführtes Cross-Connect-WDM-Signal (CC-WDM) wird dem Eingangsport 9a der Demultiplexeinheit 9 zugeführt, welche an den Kanal-Ausgangsports die Signale der einzelnen Kanäle erzeugt. Die Kanal-Ausgangsports sind jeweils mit einem Eingangsport eines 2x1-Schalters 11 verbunden. Den jeweils anderen Eingangsports der 2x1-Schalter 11 sind mit einem Local-Port verbunden, bzw. mit einer der Anzahl der Kanäle entsprechenden Anzahl von Ports, denen jeweils direkt das Signal eines einzelnen Kanals zugeführt werden kann und die zusammen den Eingangsteil LPin des bidirektionalen Local-Ports LP bilden (Local-Reiceive, d.h. die dem Local-Port zugeführten Signale).

Mittels der (vorzugsweise ansteuerbaren) 2x1-Schalter kann ausgewählt werden, ob ein bestimmter Kanal des Signals CC-WDM oder ein betreffender Kanal des Local-Ports über den Ausgangsport der Schalter 11 an die variablen Dämpfungsglieder 13 abgegeben und über diese den Kanal-Eingangsports der Multiplexeinheit 15 zugeführt werden. Mittels der Dämpfungsglieder 13 kann die in den einzelnen Kanalsignalen geführte optische Leistung jeweils in einem vorgegebenen Bereich gehalten werden. Hierzu wird die in den Kanälen geführte optische Leistung mittels Detektoren (nicht dargestellt) erfasst und die Dämpfungsglieder werden jeweils so angesteuert, dass die jeweils am Ausgang der Dämpfungsglieder geführte Kanal-Signalleistung in einem vorgegebenen Bereich liegt. Am Ausgangsport 15a der Multiplexeinheit 15, welcher mit dem Ausgangsport 7b der Add-Einheit verbunden ist, ist somit ein (Teil-) Transmit-WDM-Signal abführbar, welches für jeden Kanal CH1 bis CHn wählbar entweder das Kanalsignal des Signals CC-WDM oder das betreffende, dem Local-Port LP zugeführte Kanalsignal enthalten ist.

Selbstverständlich kann die Demultiplexeinheit 5 entfallen bzw. in einer nachgelagerten Einheit enthalten sein, wenn dieser das gesplittete R-WDM-Signal direkt zugeführt werden kann. Der Local-Port LPout führt dann ein WDM-Signal. Analog hierzu kann am Local-Port LP der Add-Einheit 7 eine Demultiplexeinheit (nicht dargestellt) vorgesehen sein, welche ein dem Eingangsport der Multiplexeinheit zugeführtes Local-Receive-WDM-Signal in die einzelnen Kanäle demultiplext. Ein derartiges Local-Receive-WDM-Signal kann beispielsweise von einer Kanalkarte geliefert werden, auf der eine Anzahl von abstimmbaren Sendeelementen sitzt, deren Ausgangssignale zu einem WDM-Signal zusammengefasst wird.

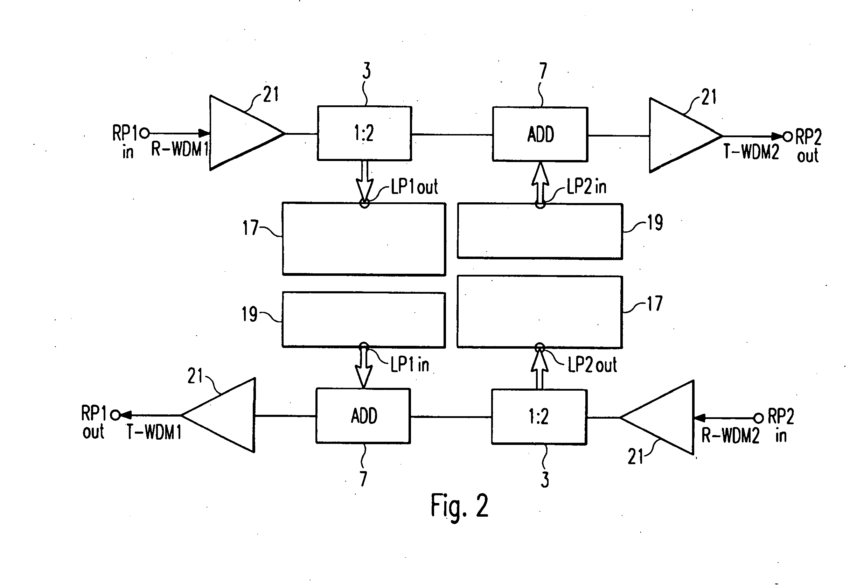

Fig. 2 zeigt schematisch eine optische Schaltungsstruktur für einen Knoten der Ordnung zwei, welcher zwei Remote-Ports RP1 und RP2 aufweist, die jeweils die logischen Teilports "RP1in" und "RP1out" bzw. "RP2in" und "RP2out" umfassen. In praktischen optischen Netzen kann entweder für jede Übertragungsrichtung ein separater Lichtwellenleiter verwendet werden oder es wird lediglich ein Lichtwellenleiter verwendet, der dann bidirektional genutzt wird.

Die in Fig. 2 dargestellte Schaltungsstruktur umfasst für jeden Remote-Port RP1 und RP2 eine 1:2-Splittereinheit 3 und eine Add-Einheit 7 sowie eine Einheit 17 für das Demultiplexen des jeweiligen gesplitteten Receive-WDM-Signals R-WDM1 bzw. R-WDM2 in die einzelnen Kanäle CH1 bis CHn und das weitere Verarbeiten der tatsächlich zu droppenden Kanäle. Die in Fig. 1 in die Drop-Einheit 1 integrierte Demultiplexeinheit 5 ist bei dem Ausführungsbeispiel nach Fig. 2 in der Einheit 17 enthalten.

Des Weiteren umfasst die Schaltungsstruktur nach Fig. 2 für jeden Remote-Port RP1, RP2 eine Transmiteinheit 19, welche die Signale derjenigen Kanäle CH1 bis CHn erzeugt, die in das von dem betreffenden Remote-Port RP1, RP2 abzuführende Transmit-WDM-Signal T-WDM1 bzw. T-WDM2 integriert werden sollen. Zudem ist am Eingang und Ausgang jedes Teil-Remote-Ports RP1in, RP1out und RP2in, RP2out jeweils ein optischer Verstärker 21 vorgesehen, um die eingehenden Signale zunächst zu verstärken und für die abgeführten Signale die Verluste der Schaltungsstruktur des Knotens auszugleichen.

Zur Realisierung von Knoten höherer Ordnung für komplexe optische Netzwerke wurden in jüngerer Zeit als hierfür einsetzbare Substrukturen sogenannte wavelength selective switches (WSS) entwickelt. Ein WSS umfasst dabei mehrere gleichberechtigte Eingangsports, denen jeweils eine Demultiplexeinheit nachgeschaltet ist. Die Demultiplexausgänge für die einzelnen vorgegebenen Kanäle (denen jeweils eine vorbestimmte Mittenwellenlänge und eine bestimmte Bandbreite zugeordnet ist) sind jeweils einem Eingangsport eines optischen Nx1-Schalters zugeführt, wobei die Anzahl der Schalter der Anzahl der Kanäle des zu realisierenden WDM-Systems entspricht. Die Schalter schalten jeweils einen Kanal eines bestimmten Eingangsport des WSS auf einen Ausgangsport jedes Schalters durch. Die Ausgangsports der Schalter sind mit den Eingangsports einer Multiplexereinheit verbunden, so dass am Ausgangsport der Multiplexereinheit ein WDM-Signal abgegeben wird, welches in vorgegebener Weise Kanäle bestimmter Eingangsports enthält. Somit kann mit einer Anzahl von N WSS, die in bestimmter Weise mit einer Anzahl von N optischen 1:N-Splittereinheiten verschaltet werden, ein Knoten der Ordnung N realisiert werden.

Ein Knoten der Ordnung N weist dabei N Remote-Ports auf, denen jeweils ein Receive-Wellenlängenmultiplexsignal R-WDM zugeführt ist und von denen jeweils ein Transmit-Wellenlängenmultiplexsignal T-WDM abführbar ist. Ein Knoten mit voller Cross-Connect-Fähigkeit ermöglicht das Extrahieren eines beliebigen Kanals eines einem beliebigen Remote-Port zugeführten Receive-WDM-Signals und das Integrieren dieses Kanals in das Transmit-WDM-Signal eines beliebigen anderen Remote-Ports.

Darüber hinaus weist ein Knoten der Ordnung N üblicherweise N Local-Ports auf, wobei jeder Local-Port einem bestimmten Remote-Port zugeordnet ist. Es ist in diesem Fall möglich, jeden beliebige Kanal des Receive-WDM-Signals des zugeordneten Remote-Ports dem Local-Port zuzuführen und die mittels dieses Kanals realisierte Verkehrsbeziehung in dem Knoten zu terminieren. In gleicher Weise kann jedem Local-Port auch ein beliebiger Kanal zugeführt werden, wobei dieser Kanal dann in das Transmit-WDM-Signal des zugeordneten Remote-Ports integriert wird.

Bei dem vorstehend kurz beschriebenen WSS handelt es sich jedoch um eine relativ neue Technik, die noch nicht von allen Anwendern, insbesondere Betreibern von großen optischen Netzwerken ohne Weiteres akzeptiert wird.

Schaltungsstrukturen mit einem derartigen WSS beschreibt beispielsweise die WO/2006/005191 A1.

Des Weiteren ist aus der US 2005/0276605 A1 ein Verfahren zur Erweiterung eines optischen Übertragungsnetzwerks bekannt, wobei die hier angegebene Schaltungsstruktur nur bis zu einem Knoten der Ordnung vier ausbaubar ist. Eine weitere Kaskadierung bzw. Erweiterung zu Knoten höherer Ordnung ist nicht möglich.

Der Erfindung liegt daher die Aufgabe zugrunde, eine optische Schaltungsstruktur zur Realisierung eines Knotens höherer Ordnung in einem optischen Übertragungsnetzwerk zur Übertragung von optischen WDM-Signalen zu schaffen, die den Einsatz von WSS vermeidet und einfach und kostengünstig zu realisieren ist. Zudem soll eine einfache und flexible Erweiterung der Struktur zu einem Knoten höherer Ordnung oder einer Reduzierung der Struktur zu einem Knoten niedrigerer Ordnung möglich sein. Des Weiteren liegt der Erfindung die Aufgabe zugrunde, eine optische Erweiterungsschaltungsstruktur zur einfachen Erweiterung einer optischen Schaltungsstruktur für einen Knoten zweiter oder höherer Ordnung zu einer Schaltungsstruktur für einen Knoten höherer Ordnung zu schaffen.

Die Erfindung löst diese Aufgabe mit den Merkmalen der Patentansprüche 1 bzw. 9 und 13.

Die Erfindung geht von der Erkenntnis aus, dass eine optische Schaltungsstruktur zur Realisierung eines Knotens der Ordnung N mit einer Anzahl von N bidirektionalen Remote-Ports, welchen jeweils ein optisches Receive-WDM-Signal zuführbar ist und von welchen jeweils ein optisches Transmit-WDM-Signal abführbar ist, ausschließlich durch die geeignete Verschaltung von Add-Einheiten, Demultiplexeinheiten und Splittereinheiten realisierbar ist.

Aus Gründen einer einfacheren Nomenklatur wird im Rahmen der vorliegenden Beschreibung eine Splittereinheit, die tatsächlich zur Aufteilung eines optischen Signals in mehrere identische Signale jeweils geringerer Leistung mit einem bestimmten Splitverhältnis als 1:n-Splittereinheit bezeichnet und eine Einheit, die in umgekehrter Richtung betrieben wird und die somit mehrere optische Signale durch eine einfache Addition der optischen Leistungen (selbstverständlich unter Berücksichtigung von Verlusten) zu einem einzigen Signal zusammenführt, als n:1-Splittereinheit.

Ein von einem bestimmten Remote-Ports abführbares Transmit-WDM-Signal wird erfindungsgemäß aus mehreren optischen Cross-Connect-WDM-Signalen zusammengesetzt, wobei zusätzlich die Signale ggf. vorhandener Add-Kanäle, die einem Local-Port zugeführt sind, dem der betreffende Remote-Port zugeordnet ist, hinzugefügt werden. Das zu erzeugende Transmit-WDM-Signal wird für jeden Remote-Port, abhängig von der Anzahl Cross-Connect-Wellenlängenmultiplexsignale, aus ein oder mehreren Teil-Transmit-WDM-Signalen zusammengesetzt, die jeweils nach einer der folgenden Alternativen erzeugt werden:
(i) Jeweils zwei der Cross-Connect-Wellenlängenmultiplexsignale werden mittels einer Kombination aus einer Add-Einheit und einer Demultiplexeinheit zu einem Teil-Transmit-Wellenlängenmultiplexsignal zusammengefasst, wobei eines der Cross-Connect-Wellenlängenmultiplexsignale dem Eingangsport der Add-Einheit und das andere der Cross-Connect-Wellenlängenmultiplexsignale dem Eingang der Demultiplexeinheit zugeführt ist, wobei die ausgangsseitig von der Demultiplexeinheit erzeugten Kanäle jeweils einem zweiten Eingangsport der 2x1-Schalter zugeführt sind;
(ii) Ein Cross-Connect-Wellenlängenmultiplexsignal und die gegebenenfalls vorhandenen Add-Kanäle werden mittels einer Add-Einheit zu einem Teil-Transmit-Wellenlängenmultiplexsignal zusammengefasst,
(iii) Ein einziges Cross-Connect-Wellenlängenmultiplexsignal wird mittels einer Add-Einheit in ein Teil-Transmit-Wellenlängenmultiplexsignal umgesetzt, wobei in diesem Fall lediglich durch die 2x1-Schalter der Add-Einheit die einzelnen Kanäle entweder durchgeschaltet oder blockiert werden.

Das ggf. nötige Zusammenfassen mehrerer Teil-Transmit-WDM-Signale zu dem von dem betreffenden Remote-Port abführbaren Transmit-WDM-Signal geschieht mittels einer optischen n:1-Splitter-Einheit, wobei n die Anzahl der zu kombinierenden Teil-Transmit-WDM-Signale bezeichnet. Ein Zusammenfassen mehrerer Teil-Transmit-WDM-Signale kann dann entfallen, wenn lediglich zwei Cross-Connect-WDM-Signale zu einem Transmit-WDM-Signal zusammenzufassen sind und keine Reiceive-Kanäle eines Local-Ports hinzuzufügen sind (d.h. wenn der betreffende Remote-Port keinem Local-Port zugeordnet ist).

Nach einer Ausführungsform der Erfindung weisen die optischen Add-Einheiten jeweils eine identische Struktur auf, wobei die Anzahl und spektrale Lage der Kanäle der von den Add-Einheiten umfassten Demultiplexeinheiten identisch ist. Die Anzahl der Kanäle kann beispielsweise gleich 32 sein.

Nach einer bevorzugten Ausführungsform der Erfindung sind einem bestimmten Remote-Port die Receive-WDM-Signale aller anderen Remote-Ports als Cross-Connect-WDM-Signale zur Erzeugung des Transmit-Wellenlängenmultiplexsignals für den betreffenden Remote-Port zugeführt. Hierdurch wird ein Knoten mit vollständiger Cross-Connect-Fähigkeit realisiert.

Nach einer Ausführungsform der Erfindung können die N-1 Cross-Connect-Wellenlängenmultiplexsignale mittels N optischer 1:(N-1)-Splittereinheiten erzeugt werden, welchen jeweils das Receive-WDM-Signal eines Remote-Ports zugeführt ist. Jede 1:(N-1)-Splittereinheit kann dabei selbstverständlich aus Splittereinheiten niedrigerer Ordnung, beispielsweise aus 1:2-Splittereinheiten, kaskadenartig zusammengesetzt sein.

Nach einer bevorzugten Ausführungsform der Erfindung ist die Anzahl M der Local-Ports gleich der Anzahl N der Remote-Ports. Hierdurch können bei einem derartig realisierten Knoten jedem von einem Remote-Port abführbaren Transmit-WDM-Signal Add-Kanäle hinzugefügt und aus jedem Receive-WDM-Signal, das einem Remote-Port zugeführt wird, Drop-Kanäle extrahiert und dem betreffenden Local-Port zugeführt werden.

Bei einem so realisierten Knoten können die N-1 Cross-Connect-WDM-Signale mittels N optischer 1:N-Splittereinheiten erzeugt werden, welchen jeweils das Receive-WDM-Signal eines Remote-Ports zugeführt ist, wobei eines der N gesplitteten Signale jeweils dem betreffenden Local-Port zugeführt ist.

Das einem Local-Port zugeführte Receive- WDM-Signal des zugeordneten Remote-Ports kann dabei mittels einer Wellenlängendemultiplexeinheit in die einzelnen Drop-Kanäle gedemultiplext werden.

Nach einer Ausführungsform der Erfindung kann die optische Splittereinheit zum Zusammenfassen mehrerer Teil-Transmit-WDM-Signale kaskadenartig aus mehreren optischen Splittereinheiten niedrigerer Ordnung aufgebaut sein, vorzugsweise aus optischen 2: 1-Splittereinheiten.

Die erfindungsgemäße optische Erweiterungsschaltungsstruktur zur Erweiterung einer optischen Schaltungsstruktur zur Realisierung eines Knotens zweiter oder höherer Ordnung ermöglicht die Erweiterung eines Knotens zweiter oder höherer Ordnung, dessen Struktur auf einer optischen Schaltungsstruktur zur Realisierung des Knotens zweiter Ordnung basiert, die für jeden der zwei Remote-Ports eine optische Basisbaugruppe aufweist, welche eine 1:2-Splittereinheit zur Erzeugung der Drop-Kanäle und des Cross-Connect-WDM-Signals aus dem das Receive-WDM-Signal des betreffenden Remote-Ports für den jeweils anderen Remote-Port umfasst sowie eine Add-Einheit, welcher die Add-Kanäle für den betreffenden Remote-Port und das Cross-Connect-WDM-Signal zugeführt ist und welche hieraus das Transmit-WDM-Signal für den betreffenden Remote-Port erzeugt. Die Erweiterungsschaltungsstruktur weist eine Kombination aus einer Add-Einheit und einer Demultiplexeinheit zur Erzeugung des Transmit-WDM-Signals oder eines Teil-Transmit-WDM-Signals auf, wobei ein erstes der Cross-Connect-WDM-Signale dem Eingangsport der Add-Einheit und ein zweites der Cross-Connect-WDM-Signale dem Eingang der Demultiplexeinheit zugeführt ist, wobei die ausgangsseitig von der Demultiplexeinheit erzeugten Signale der Add-Kanäle jeweils einem zweiten Eingangsport der 2x1-Schalter zugeführt sind. Die Erweiterungsschaltungsstruktur umfasst des Weiteren eine optische 2:1-Splittereinheit, wobei ein Eingangsport der Splittereinheit mit dem Ausgangsport der Add-Einheit verbunden ist. Schließlich umfasst die Erweiterungsschaltungsstruktur auch eine optische 1:3-Splittereinheit zur Erzeugung der Cross-Connet-WDM-Signale und des Signals, welches dem betreffenden Local-Port zuführbar ist.

Unter Verwendung einer derartigen Erweiterungsschaltungsstruktur kann ein Knoten zweiter Ordnung, welcher die vorstehend beschriebene Struktur aufweist, auf einfache Weise zu einem Knoten dritter oder vierter Ordnung erweitert werden, welcher die folgende Struktur aufweist:

Für jeden der drei oder vier Remote-Ports ist eine optische Basisbaugruppe und eine optische Erweiterungsschaltungsstruktur mit der vorbeschriebenen Struktur vorgesehen. Zur Erzeugung des Transmit-WDM-Signal für jeden Remote-Port sind der Add-Einheit der Basisbaugruppe ein erstes Cross-Connect-WDM-Signal und gegebenenfalls die Add-Kanäle des betreffenden Local-Ports zugeführt. Zudem ist dem Eingangsport der Add-Einheit oder dem Eingangsport der Demultiplexeinheit der Erweiterungsschaltungsstruktur ein zweites Cross-Connect-WDM-Signal zugeführt. Im Fall der Realisierung eines Knotens vierter Ordnung ist dem Eingangsport der Demultiplexeinheit oder dem Eingangsport der Add-Einheit der Erweiterungsschaltungsstruktur ein drittes Cross-Connect-WDM-Signal zugeführt. Schließlich ist der Ausgangsport der Add-Einheit der Basisbaugruppe mit einem Eingangsport der 2: 1-Splittereinheit der Erweiterungsschaltungsstruktur verbunden, wobei das Transmit-WDM-Signal für den betreffenden Remote-Port am Ausgangsport der 2:1-Splittereinheit anliegt. Der Ausgangsport der 1:2-Splittereinheit der Basisbaugruppe mit dem Eingangsport der 1:3-Splittereinheit der Erweiterungsschaltungsstruktur verbunden. Das an den Ausgangsports der 1:3-Splittereinheit der Erweiterungsschaltungsstruktur erzeugte Cross-Connect-WDM-Signal ist jeweils in Richtung auf die anderen Remote-Ports geführt.

Eine derartige Struktur eines Knotens dritter oder vierter Ordnung kann auf einfache Weise unter Verwendung erfindungsgemäßer optischer Erweiterungsschaltungsstrukturn auf eine optische Schaltungsstruktur für einen Knoten der Ordnung fünf oder sechs erweitert werden, der folgende Struktur aufweist:

Die vorbeschriebene Schaltungsstruktur für einen Knoten der Ordnung vier wird zur Schaffung des einen oder der zwei zusätzliche Remote-Ports pro zusätzlichem Remote-Port um eine Basisbaugruppe und eine Erweiterungsschaltungsstrukturn ergänzt, wobei die Struktur für jeden Remote-Port der Struktur pro Remote-Port der vorbeschriebenen Schaltungsstruktur für einen Knoten der Ordnung vier entspricht.

Die so erweiterte Schaltungsstruktur wird für jeden Remote-Port um eine zweite Erweiterungsschaltungsstruktur ergänzt. Zur Erzeugung des Transmit-WDM-Signals für jeden Remote-Port am Ausgangsport der 2:1-Splittereinheit der zweiten Erweiterungsschaltungsstruktur ist der Ausgangsport der 2: 1-Splittereinheit der ersten Erweiterungsschaltungsstruktur mit dem Eingangsport der 2:1-Splittereinheit der zweiten Erweiterungsschaltungsstruktur verbunden, wobei dementsprechend das Transmit-WDM-Signal der vorbeschriebenen Struktur für einen Knoten der Ordnung drei oder vier als Teil-Transmit-WDM-Signal verwendet wird. Gleichzeitig ist dem Eingangsport der Add-Einheit oder dem Eingangsport der Demultiplexeinheit der zweiten Erweiterungsschaltungsstruktur ein viertes Cross-Connect-WDM-Signal zugeführt. Im Fall der Realisierung eines Knotens sechster Ordnung ist dem Eingangsport der Demultiplexeinheit oder dem Eingangsport der Add-Einheit der zweiten Erweiterungsschaltungsstruktur ein fünftes Cross-Connect-WDM-Signal zugeführt. Des Weiteren ist ein Ausgangsport der 1:3-Splittereinheit der ersten Erweiterungsschaltungsstruktur mit dem Eingangsport der 1:3-Splittereinheit der Erweiterungsschaltungsstruktur verbunden. Schließlich ist das an übrigen zwei Ausgangsports der 1:3-Splittereinheit der ersten Erweiterungsschaltungsstruktur und den drei Ausgangsports der 1:3-Splittereinheit der zweiten Erweiterungsschaltungsstruktur erzeugte Cross-Connect-WDM-Signal jeweils in Richtung auf die anderen Remote-Ports geführt.

Eine derartige optische Schaltungsstruktur für einen Knoten der Ordnung sechs lässt sich unter Verwendung erfindungsgemäßer optischer Erweiterungsschaltungsstrukturn wiederum auf einfache Weise zu einer optischen Schaltungsstruktur für einen Knoten der Ordnung sechs plus 2n erweitern, wobei n eine ganze natürliche Zahl ist. Hierzu wird die vorbeschriebene Struktur für einen Knoten sechster Ordnung pro zusätzlichem Remote-Port (d.h. pro zusätzlicher Ordnung) um eine Basisbaugruppe und zwei Erweiterungsschaltungsstrukturn ergänzt, wobei die Struktur für jeden Remote-Port der vorbeschriebenen Struktur pro Remote-Port des Knotens sechster Ordnung entspricht. Zusätzlich wird diese Struktur pro Remote-Port pro 2n zusätzlicher Remote-Ports (d.h. für jede Erhöhung der Ordnung um 2n) um eine zusätzliche Erweiterungsschaltungsstruktur ergänzt. Für jeden Remote-Port erfolgt die Verschaltung von jeweils zwei aufeinanderfolgenden Erweiterungsschaltungsstrukturn dabei analog zur Verschaltung der ersten und zweiten Erweiterungsschaltungsstruktur der vorbeschriebenen Struktur für einen Knoten sechster Ordnung, wobei das Transmit-WDM-Signal für jeden Remote-Port in entsprechender Weise am Ausgangsport der 2:1-Splittereinheit der zuletzt hinzugefügten Erweiterungsschaltungsstruktur erzeugt wird.

Erfindungsgemäß kann eine optische Basisschaltungsstruktur zur Realisierung eines unterbrechungsfrei erweiterbaren Knotens zweiter Ordnung zu einer optischen Schaltungsstruktur nach einem der Patentansprüche 1 bis 8 folgende Komponenten umfassen:
(i) Eine optische Add-Einheit, deren Ausgangsport mit einem ersten Eingangsport einer 2: 1-Splittereinheit verbunden ist, wobei der zweite Eingangsport der 2:1-Splittereinheit im Fall der Realisierung eines Knotens zweiter Ordnung ungenutzt bleibt und wobei am Ausgangsport der 2: 1-Splittereinheit das Transmit-WDM-Signal des betreffenden Ports aus den der Add-Einheit gegebenenfalls zugeführten Add-Kanälen und dem dem Eingangsport der Add-Einheit zugeführten Cross-Connect-WDM-Signal erzeugt wird;
(ii) Eine 1:2-Splittereinheit, der jeweils das Receive-WDM-Signal des betreffenden Remote-Ports zugeführt ist, wobei an einem Ausgangsport der 1:2-Splittereinheit die Drop-Kanäle abgeführt werden, und
(iii) Eine 1:m-Splittereinheit, deren Eingangsport mit dem anderen Ausgangsport der 1:2-Splittereinheit verbunden ist, wobei m eine natürliche Zahl größer gleich zwei ist, und wobei an den Ausgangsports der 1:m-Splittereinheit das Cross-Connect-WDM-Signal für das Zuführen zu weiteren Remote-Ports erzeugt wird.

Ein Knoten zweiter Ordnung kann dann in der Weise realisiert werden, dass für jeden der beiden Remote-Ports eine solche optische Basisschaltungsstruktur vorgesehen ist und dass jeweils das an einem Ausgangsport der 1:m-Splittereinheit der einen Basisschaltungsstruktur erzeugte Cross-Connect-WDM-Signal dem Eingangsport der Add-Einheit der jeweils anderen Basisschaltstruktur zugeführt ist.

Eine derartige Schaltungsstruktur für einen Knoten zweiter Ordnung kann in der Weise zu einem Knoten dritter oder vierter Ordnung erweitert werden, dass für jeden weiteren Remote-Port eine vorstehend beschriebene Basisschaltungsstruktur hinzugefügt wird, wobei jeder Add-Einheit einer hinzugefügten Basisschaltungsstruktur das an einem Ausgang der 1:m-Splittereinheit einer der anderen Basisschaltstrukturen erzeugte Cross-Connect-Wellenlängenmultiplexsignal zugeführt wird, und dass für jeden Remote-Port eine Erweiterungsschaltungsstruktur hinzugefügt wird, bestehend aus einer weiteren Add-Einheit, welche mit einer Demultiplexeinheit derart kombiniert ist, dass die Demultiplex-Ausgangsports der Demultiplexeinheit mit den Eingangsports der 2x1-Schalter der Add-Einheit verbunden sind, mit dem freien Eingangsport der 2:1-Splittereinheit verbunden wird, wobei für jeden Remote-Port dem Eingangsport der Add-Einheit und/oder dem Eingangsport der Demultiplexeinheit der Erweiterungsschaltungsstruktur ein zweites oder drittes Cross-Connect-Wellenlängenmultiplexsignal von einem der Ausgangsports der 1:m-Splittereinheiten der Basisschaltungsstrukturen der jeweils anderen Remote-Ports zugeführt werden.

Erfindungsgemäß kann die vorstehend beschriebene Schaltungsstruktur zur Realisierung eines Knotens zweiter Ordnung derart zu einem Knotens der Ordnung N größer oder gleich 5 erweitert werden, dass für jeden weiteren Remote-Port eine Basisschaltungsstruktur nach Anspruch 13 hinzugefügt wird, wobei jeder Add-Einheit einer hinzugefügten Basisschaltungsstruktur das an einem Ausgang der 1:m-Splittereinheit einer der anderen Basisschaltstrukturen erzeugte Cross-Connect-Wellenlängenmultiplexsignal zugeführt wird. Des Weiteren wird für jeden Remote-Port für jedes angefangene Paar von hinzugefügten Remote-Ports eine Erweiterungsschaltungsstruktur hinzugefügt, bestehend aus einer weiteren Add-Einheit, welche derart mit einer Demultiplexeinheit kombiniert ist, dass die Demultiplex-Ausgangsports der Demultiplexeinheit mit den Eingangsports der 2x1-Schalter der Add-Einheit verbunden sind, mit dem freien Eingangsport, der 2:1-Splittereinheit verbunden wird. Schließlich wird für jeden der Remote-Ports eine n:1-Splittereinheit hinzugefügt, wobei die Anzahl n die Anzahl der angefangenen Paare von hinzugefügten Remote-Ports bezeichnet. Für jeden Remote-Port werden alle Ausgangsports Add-Einheiten der hinzugefügten Erweiterungsschaltungsstrukturen mit den Eingangsports 1:n-Splittereinheit verbunden. Darüber hinaus wird für jeden Remote-Port der Ausgangsport der 1:n-Splittereinheit dem Eingangsport der 2: 1-Splittereinheit der Basisschaltungsstruktur zugeführt. Den Eingangsports der Add-Einheiten und der Demultiplexeinheiten wird jeweils eines der Cross-Connect-Wellenlängenmultiplexsignale der anderen Remote-Ports zugeführt. Schließlich wird für jeden Remote-Port zur Erzeugung des Cross-Connect-Wellenlängenmultiplexsignals für die jeweils anderen Remote-Ports die 1:m-Splittereinheit der betreffenden Basisschaltungsstruktur erforderlichenfalls zu einer 1:(N-1)-Splittereinheit erweitert wird.

Dabei kann die 1:m-Splittereinheit der Basisschaltungsstruktur beispielsweise als 1:3-Splittereinheit ausgebildet sein. Damit kann ein Knoten zweiter Ordnung ohne Erweiterung der 1:3-Splittereinheit zu einem Knoten dritter oder vierter Ordnung erweitert werden. Zur Realisierung eines Knotens höherer Ordnung kann die 1:3-Splittereinheit dann kaskadenartig, beispielsweise ausschließlich unter Verwendung von zusätzlichen 1:2-Splittereinheiten zu einer 1:(N-1)-Splittereinheit erweitert werden.

Sämtliche der vorstehend beschriebenen Basisstrukturen und Erweiterungsschaltungsstrukturen können selbstverständlich jeweils als separate Baugruppen ausgebildet oder Bestandteil von Baugruppen sein, die weitere Komponenten umfassen. Hierdurch kann die Erweiterung vorhandener Schaltungsstrukturen zu Schaltungsstrukturen für Knoten höherer Ordnung in einfacher Weise modular erfolgen.

Weitere Ausführungsformen der Erfindung ergeben sich aus den Unteransprüchen.

Die Erfindung wird nachstehend anhand in der Zeichnung dargestellter Ausführungsbeispiele näher erläutert. In der Zeichnung zeigen:
- Fig. 1: ein schematisches Blockdiagramm einer bekannten Drop-Einheit (Fig. 1a) und einer bekannten Add-Einheit zur Realisierung der Schaltungsstrukturen und Baugruppen nach der Erfindung;
- Fig. 2: ein schematisches Blockdiagramm einer bekannten Schaltungsstruktur zur Realisierung eines Knotens zweiter Ordnung;
- Fig. 3: eine schematische Blockdarstellung einer Schaltungsstruktur nach der Erfindung zur Realisierung eines Knoten der Ordnung N für ungeradzahlige N;
- Fig. 4: eine schematische Blockdarstellung einer Schaltungsstruktur nach der Erfindung zur Realisierung eines Knoten der Ordnung N für geradzahlige N;
- Fig. 5: eine schematische Blockdarstellung einer bekannten Schaltungsstruktur zur Realisierung eines Knotens zweiter Ordnung;
- Fig. 6: eine schematische Blockdarstellung einer Schaltungsstruktur nach der Erfindung zur Realisierung eines Knotens dritter oder vierter Ordnung, wobei lediglich die Komponenten für einen einzigen der drei oder vier Remote-Ports dargestellt sind;
- Fig. 7: eine schematische Blockdarstellung einer Schaltungsstruktur nach der Erfindung zur Realisierung eines Knotens fünfter oder sechster Ordnung, wobei lediglich die Komponenten für einen einzigen der fünf oder sechs Remote-Ports dargestellt sind;
- Fig. 8: eine schematische Blockdarstellung einer Schaltungsstruktur nach der Erfindung zur Realisierung eines unterbrechungsfrei erweiterbaren Knotens zweiter Ordnung;
- Fig. 9: eine schematische Blockdarstellung einer Schaltungsstruktur nach der Erfindung zur Realisierung eines Knotens dritter oder vierter Ordnung durch Erweiterung der Schaltungsstruktur eines Knotens zweiter Ordnung gemäß Figur 8, wobei lediglich die Komponenten für einen einzigen der drei oder vier Remote-Ports dargestellt sind; und
- Fig. 10: eine schematische Blockdarstellung einer Schaltungsstruktur nach der Erfindung zur Realisierung eines Knotens fünfter oder sechster Ordnung durch Erweiterung der Schaltungsstruktur eines Knotens zweiter Ordnung gemäß Figur 8, wobei lediglich die Komponenten für einen einzigen der fünf oder sechs Remote-Ports dargestellt sind.

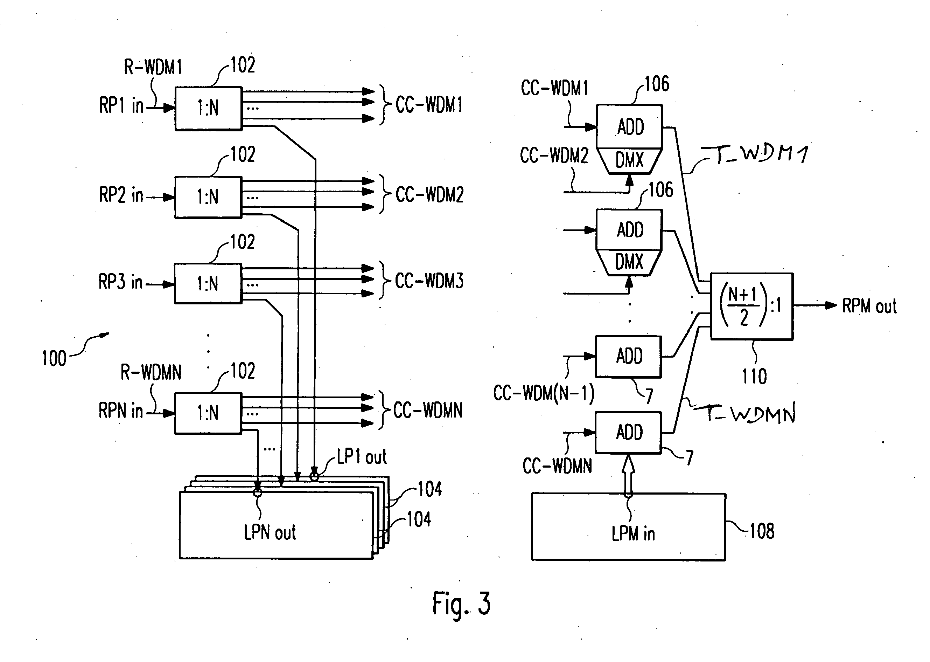

Fig. 3 zeigt eine schematische Blockdarstellung einer Schaltungsstruktur 100 zur Realisierung eines Knotens der Ordnung N für ungeradzahlige N. Dabei sind lediglich die Eingangsseiten RP1in bis RPNin der Remote-Ports RP1 bis RPN dargestellt. Jedem der Remote-Ports RP1 bis RPN ist ein Receive-WDM-Signal R-WDM1 bis R-WDMN zugeführt. Jedem der Remote-Ports RP1 bis RPN ist eine 1:N-Splittereinheit 102 nachgeschaltet, welche jeweils das ihr zugeführte Receive-WDM-Signal R-WDM1 bis R-WDMN leistungsmäßig in jeweils N einzelne Teilsignale (entsprechend einem gegebenen Teilerverhältnis) splittet, wobei jeweils N-1 der gesplitteten Teilsignale als Cross-Connect-WDM-Signale CC-WDM1 bis CC-WDMN in Richtung auf die Ausgangsseiten RP1out bis RPNout der jeweils anderen Remote-Ports RP1 bis RPN geführt werden.

Eines der mittels der Splittereinheiten 102 erzeugten, gesplitteten Teilsignale wird jeweils als Receive-WDM-Signal der Ausgangsseite LP1out bis LPNout der Local-Ports LP1 bis LPN zugeführt. Da jedes der Receive-WDM-Signale die volle Information des Receive-WDM-Signals R-WDM1 bis R-WDMN enthält, welches jeweils den Remote-Ports RP1 bis RPN zugeführt ist, können sämtliche Kanäle, die in den Receive-WDM-Signalen enthalten sind, in dem betreffenden Knoten gedroppt werden. Zur Weiterverarbeitung der den Local-Ports zugeführten WDM-Signale ist jeder Ausgangsseite LP1out bis LPNout eine Einheit 104 zur Weiterverarbeitung des dem jeweiligen Local-Port zugeführten Empfangssignals nachgeschaltet. Das Weiterverarbeiten kann in einem Demultiplexen der einzelnen Kanalsignale und einem Auswählen der tatsächlich zu droppenden Signale bestehen.

In Fig. 3 rechts ist die jeweils zur Realisierung einer Ausgangsseite eines Remote-Ports RPMout erforderliche Schaltungsstruktur dargestellt. Der Ausgangsseite RPMout des Remote-Ports RPM sind die an den Eingangsseiten der jeweils anderen Remote-Ports erzeugten Cross-Connect-WDM-Signale zugeführt, d.h. die in Fig. 3 dargestellte Ausgangsseite RPMout des Remote-Ports RPM erhält sämtliche Cross-Connect-WDM-Signale CC-WDM1 bis CC-WDMN, jedoch ohne das Cross-Connect-WDM-Signal CC-WDMM.

Jeweils zwei Cross-Connect-WDM-Signale werden mittels einer kombinierten Add-Demultiplex-Einheit 106 zu einem Teil-Transmit-WDM-Signal zusammengefasst. Die Add-Demultiplex-Einheit 106 entspricht dabei einer Add-Einheit 7 gemäß Fig. 1b, wobei die Ports für das Zuführen der Add-Kanäle mit den Demultiplex-Ausgangsports einer Demultiplex-Einheit DMX verbunden sind. Wird somit dem Eingangsport der Demultiplex-Einheit DMX der Add-Demultiplex-Einheit 106 ein Cross-Connect-WDM-Signal zugeführt, so wird dieses in die einzelnen Kanäle gedemultiplext, wobei die Kanäle jeweils den 2x1-Schaltern 11 der in Fig. 1b dargestellten Add-Einheit 7 zugeführt werden. Demzufolge kann durch die Ansteuerung der 2x1-Schalter 11 ausgewählt werden, ob jeweils ein Kanal des dem Eingangsport der Add-Einheit zugeführten Cross-Connect-WDM-Signals oder der entsprechende Kanal des dem Eingangsport der Demultiplex-Einheit DMX zugeführten Cross-Connect-WDM-Signals extrahiert und in das am Ausgangsport der Add-Demultiplex-Einheit 106 erzeugten Teil-Transmit-WDM-Signals integriert wird.

Da bei einer ungeradzahligen Anzahl von Remote-Ports eine gerade Anzahl von Cross-Connect-WDM-Signalen an der Ausgangsseite eines Remote-Ports zu dem jeweiligen Transmit-WDM-Signal zusammengefasst werden müssen und zudem die in Richtung auf den betreffenden Remote-Port abzuführenden Add-Kanäle in das Transmit-WDM-Signal integriert werden müssen, kann, wie in Fig. 3 rechts dargestellt, jeweils ein Cross-Connect-Signal mittels einer Add-Einheit 7 mit den betreffenden Add-Kanälen (die als einzelne Kanalsignale zugeführte werden) zu einem betreffenden Teil-Transmit-WDM-Signal zusammengefasst werden. Bei der in Fig. 3 rechts dargestellten Struktur wird das Cross-Connect-WDM-Signal CC-WDMN mit den Add-Kanälen, die für jeden Remote-Port von einer Einheit 108 erzeugt werden, zu einem Teil-Transmit-WDM-Signal zusammengefasst.

Das bei einem Knoten ungerader Ordnung N übrig bleibende, einzelne Cross-Connect-WDM-Signal kann ebenfalls mittels einer einzelnen Add-Einheit 7 geführt werden, wobei die Add-Einheit 7 in diesem Fall lediglich dazu dient, mittels der 2x1-Schalter ausgewählte Kanäle zu extrahieren und die anderen Kanäle zu blockieren. Bei der in Fig. 3 rechts dargestellten Struktur wird das Cross-Connect-WDM-Signal CC-WDM(N-1) als einzelnes Signal über eine Add-Einheit 7 geführt. Selbstverständlich kann anstelle der Add-Einheit auch eine kombinierte Add-Demultiplex-Einheit 106 verwendet werden, wobei der Eingangsport der Demultiplex-Einheit ungenutzt bleibt. Auch können die Cross-Connect-WDM-Signale CC-WDM(N-1) und CC-WDMN mittels einer Add-Demultiplexer-Einheit 106 zusammengefasst werden, wobei in diesem Fall die Add-Kanäle über die Add-Einheit 7 zugeführt werden und der Eingangsport der Add-Einheit 7 für das Zuführen eines Cross-Connect-WDM-Signals unbenützt bleibt.

Die von den Add-Demultiplex-Einheiten 106 und den Add-Einheiten 7 erzeugten Teil-Transmit-WDM-Signale werden einer Splitter-Einheit 110, welche eine geeignete Anzahl von Eingangsports aufweist, zugeführt. Für einen Knoten einer ungeradzahligen Ordnung N ergibt sich die Anzahl der erforderlichen Eingangsports der Splittereinheit 110 zu (N+1)/2.

Am Ausgangsport der Splittereinheit 110 wird somit das Transmit-WDM-Signal T-WDM1 bis T-WDMN für den betreffenden Remote-Port RP1 bis RPN erzeugt.

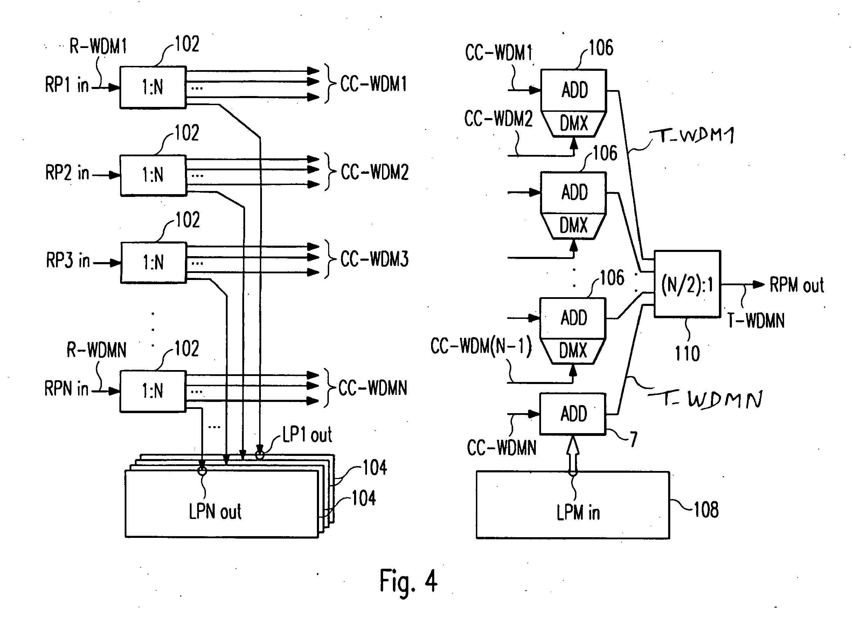

Die in Fig. 4 dargestellte Schaltungsstruktur 100 für einen Knoten geradzahliger Ordnung N unterscheidet sich von der in Fig. 3 dargestellten Schaltungsstruktur für einen Knoten einer ungeradzahligen Ordnung N lediglich dadurch, dass an der Ausgangsseite jedes Remote-Ports RP1 bis RPN kein einzelnes Cross-Connect-WDM-Signal mittels einer Add-Einheit 7 bzw. einer teilweise ungenutzten Add-Demultiplex-Einheit 106 zu einem entsprechenden Teil-Transmit-WDM-Signal verarbeitet werden muss. Die Anzahl der Eingangsports für die Splittereinheit 110 ergibt sich in diesem Fall zu N/2 für geradzahlige N.

Im Folgenden werden verschiedene Möglichkeiten beschrieben, wie eine Schaltungsstruktur zur Realisierung eines bereits vorhandenen Knotens zweiter Ordnung auf einfache Weise zu einer der vorbeschriebenen Schaltungsstrukturen für einen Knoten höherer Ordnung erweitert werden können.

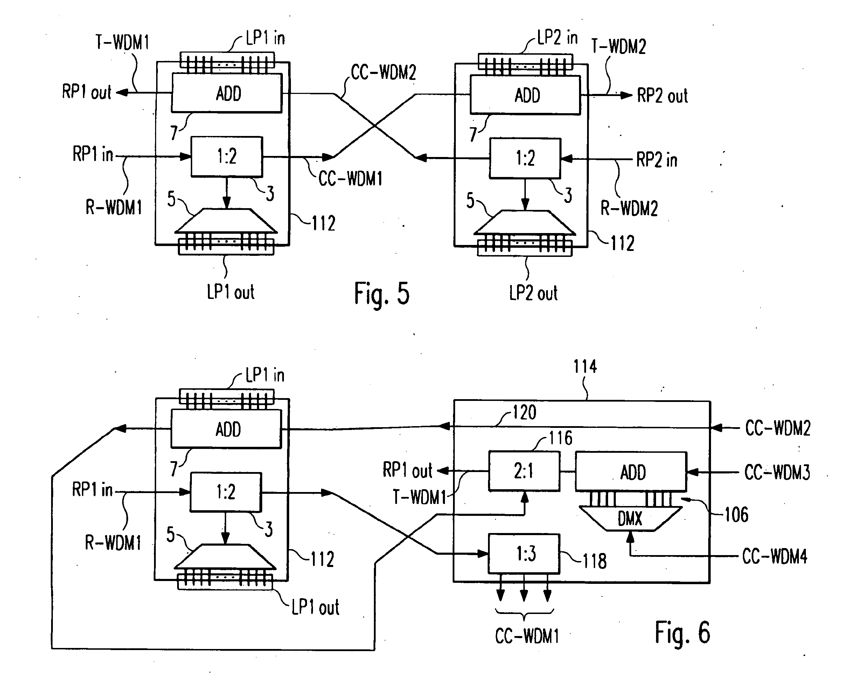

Hierzu zeigt Fig. 5 eine schematische Blockdarstellung einer Schaltungsstruktur zur Realisierung eines Knotens zweiter Ordnung. Dabei ist für jeden Remote-Port RP1, RP2 eine Basisschaltungsstruktur 112 vorgesehen, welche jeweils eine Add-Einheit 7 und eine 1:2-Splittereinheit 3 umfasst. Zusätzlich weist die in Fig. 5 dargestellte Schaltungsstruktur in jeder Basisschaltungsstruktur 112 eine Demultiplex-Einheit 5 auf, deren Eingangsport das an einem der Ausgangssports der Splittereinheit 3 erzeugte, gesplittete Signal zugeführt ist. Zur Realisierung eines Knotens der Ordnung 2 ist jeweils ein Ausgangsport der Splittereinheiten 3 mit dem Eingangsport der Add-Einheit der jeweils anderen Basisschaltungsstruktur 112 verbunden.

Damit wird ein der Splittereinheit 3 einer Basisschaltungsstruktur 112 zugeführtes Remote-WDM-Signal R-WDM1 bzw. R-WDM2 mittels jeder Splittereinheit 3 in jeweils ein Cross-Connect-WDM-Signal CC-WDM1 bzw. CC-WDM2 und ein hinsichtlich des Informationsgehalts identisches Signal gesplittet, welches jeweils dem Eingangsport der betreffenden Demultiplex-Einheit 5 der entsprechenden Basisschaltungsstruktur 112 als Cross-Connect-WDM-Signal CC-WDM1 bzw. CC-WDM2 zugeführt ist. Bei der in Fig. 5 dargestellten Schaltungsstruktur eines Knotens zweiter Ordnung können am Local-Port LP1 bzw. LP2, genauer gesagt an den Ausgängen des Local-Ports LP1out bzw. LP2out somit jeweils die gedemultiplexten einzelnen Kanalsignale empfangen, abgeführt und einer weiteren Verarbeitung zugeführt werden. Gleichzeitig. können die einzelnen, hinzuzufügenden Add-Kanäle als einzelne Signale der jeweiligen Add-Einheit 7 jeder Basisschaltungsstruktur 112 am Eingang des jeweiligen Local-Ports LP1in bzw. LP2in zugeführt werden.

Fig. 6 zeigt nunmehr schematisch eine Schaltungsstruktur für einen Knoten dritter oder vierter Ordnung, wobei lediglich die Komponenten zur Realisierung eines einzigen Remote-Ports, nämlich des Remote-Ports RP1, und zur Realisierung des betreffenden Local-Ports, nämlich des Local-Ports LP1, dargestellt sind. Für die übrigen Ports sind identische Schaltungsstrukturen vorgesehen, die, wie nachstehend beschrieben, untereinander verbunden sind.

Die in Fig. 6 dargestellte Schaltungsstruktur zur Realisierung eines einzigen Remote-Ports und des zugehörigen Local-Ports umfasst eine bereits aus Fig. 5 bekannte Basisschaltungsstruktur 112. Des Weiteren ist eine Erweiterungsschaltungsstruktur 114 vorgesehen, die eine Add-Demultiplex-Einheit 106 umfasst, wobei der Ausgangsport der Add-Einheit mit dem Eingangsport einer 2:1-Splittereinheit 116 verbunden ist. Die Erweiterungsschaltungsstruktur 114 umfasst des Weiteren eine 1:3-Splittereinheit 118. Zusätzlich kann, wie in Fig. 6 dargestellt, ein durchgeschleifter Lichtwellenleiter 120 vorgesehen sein.

Somit können die beiden Basisschaltungsstrukturen 112, die zur Realisierung eines Knotens zweiter Ordnung gemäß Fig. 5 vorhanden sind, dazu verwendet werden, um den vorhandenen Knoten zweiter Ordnung zu einem Knoten dritter oder vierter Ordnung zu erweitern, wobei für jeden Remote-Port des zu realisierenden Knotens dritter oder vierter Ordnung eine Schaltungsstruktur gemäß Fig. 6 vorzusehen ist.

Damit muss zur Erweiterung eines vorhandenen Knotens zweiter Ordnung für jeden zusätzlichen Remote-Port (d.h. für jede zusätzliche Ordnung drei oder vier) eine weitere Basisschaltungsstruktur 112 hinzugefügt werden. Des Weiteren muss für jeden der drei oder vier Ports des zu realisierenden Knotens dritter oder vierter Ordnung eine Erweiterungsschaltungsstruktur 114 hinzugefügt werden. Für jeden Remote-Port und jeden zugeordneten Local-Port sind dabei die betreffende Basisschaltungsstruktur 112 und die betreffende Erweiterungsschaltungsstruktur 114 gemäß Fig. 6 zu verschalten.

Hierzu muss jeweils der Ausgangsport des durchgeschleiften Lichtwellenleiters 120 mit dem Eingangsport der Add-Einheit 7 der Basisschaltungsstruktur 112 verbunden werden und der Ausgangsport der 1:2-Splittereinheit 3 der Basisschaltungsstruktur 112 mit dem Eingangsport der 1:3-Splittereinheit 118 der Erweiterungsschaltungsstruktur 114. Des Weiteren muss der Ausgangsport der Add-Einheit 7 der Basisschaltungsstruktur 112 mit dem freien Eingangsport der 2:1-Splittereinheit 116 der Erweiterungsschaltungsstruktur 114 verbunden werden.

Der in Fig. 6 dargestellten Schaltungsstruktur ist am Eingang der 1:2-Splittereinheit 3 der Basisschaltungsstruktur das Receive-WDM-Signal R-WDM1 zugeführt. Dieser Eingangsport der 1:2-Splittereinheit 3 bildet somit den Eingangsport RP1in des Remote-Ports RP1.

Dem Eingangsport des durchgeschleiften Lichtwellenleiters 120 und den beiden Eingangsports der Add-Demultiplex-Einheit 106 der Erweiterungsschaltungsstruktur 114 ist jeweils ein Cross-Connect-WDM-Signal zugeführt, welche von den die jeweils anderen Ports realisierenden analogen Schaltungsstrukturen erzeugt werden. Dabei werden jeweils zwei Cross-Connect-WDM-Signale (in Fig. 6 die beiden Signale CC-WDM3 und CC-WDM4) zu einem Teil-Tränsmit-WDM-Signal zusammengefasst. Ein weiteres Teil-Transmit-WDM-Signal wird durch die Kombination des dritten Cross-Connect-WDM-Signals (in Fig. 6 das Signal CC-WDM2) mit den Add-Kanälen des jeweiligen Local-Ports mittels der Add-Einheit 7 der Basisschaltungsstruktur 112 erzeugt. Das am Ausgangsport der Add-Einheit 7 der Basisschaltungsstruktur 112 abgeführte Teil-Tansmit-WDM-Signal wird dem Eingangsport der 2:1-Splittereinheit 116 der Erweiterungsschaltungsstruktur 114 zugeführt und auf diese Weise mit dem mittels der Add-Demultiplex-Einheit 106 erzeugten Teil-Transmit-WDM-Signal zu dem Transmit-WDM-Signal T-WDM1 bis T-WDM4 des betreffenden Remote-Ports RP1 bis RP4 zusammengefasst. Der Ausgangsport der 2:1-Splittereinheit 116 der Erweiterungsschaltungsstruktur 114 bildet somit die Ausgangsseite RP1out bis RP4out des betreffenden Remote-Ports RP1 bis RP4.

Die Ausgangsports der 1:3-Splittereinheit 118 der in Fig. 6 dargestellten Schaltungsstruktur zur Realisierung des Remote-Ports RP1 splitten das ihr zugeführte Signal, welches mit dem Receive-WDM-Signal R-WDM1 identisch ist, um auf diese Weise an den Ausgangsports der Splittereinheit 118 jeweils ein Cross-Connect-WDM-Signal CC-WDM1 zu erzeugen, welches jeweils jeder der anderen Schaltungsstrukturen zur Realisierung der anderen Remote-Ports RP2 bis RP4 zugeführt wird. Die der in Fig. 6 dargestellten Struktur zur Realisierung des Remote-Ports RP1 und des Local-Ports LP zugeführten Cross-Connect-WDM-Signale CC-WDM2 bis CC-WDM4 werden in analoger Weise von den entsprechenden Schaltstrukturen zur Realisierung der übrigen Remote-Ports RP2 bis RP4 und der Local-Ports LP2 bis LP4 erzeugt.

Damit lässt sich durch das Hinzufügen entsprechender Basisschaltungsstrukturen 112 bzw. Erweiterungsschaltungsstrukturen 114 unter Verwendung bereits vorhandener Basisschaltungsstrukturen 112 zur Realisierung eines Knotens der Ordnung zwei auf einfache Weise ein Knoten der Ordnung drei oder vier erzeugen.

Bei der in Fig. 6 dargestellten Erweiterungsschaltungsstruktur bleibt selbstverständlich einer der Eingangsports der Add-Demultiplex-Einheit 106 oder der Eingangsport der Add-Einheit 7 der Basisschaltungsstruktur 112 ungenutzt, wenn lediglich ein Knoten der Ordnung drei realisiert werden soll.

Um ein einfaches, modulartiges Erweitern eines Knotens der Ordnung zwei zu einem Knoten höherer Ordnung zu ermöglichen, können selbstverständlich die Basisschaltungsstrukturen 112 und die Erweiterungsschaltungsstrukturen 114 als separate Baugruppen ausgebildet sein. Diese Möglichkeit ist in Fig. 4 bis 10 durch die durchgezogenen Rahmen umd die jeweiligen Komponenten angedeutet.

Selbstverständlich kann auch auf den durchgeschleiften Lichtwellenleiter 120 der Erweiterungsschaltungsstruktur 114 verzichtet werden. In diesem Fall muss das betreffende Cross-Connect-WDM-Signal (in Fig. 6 das Signal CC-WDM2) direkt dem Eingangsport der Add-Einheit 7 der Basisschaltungsstruktur 112 zugeführt werden. Die in Fig. 6 dargestellte Lösung für die Erweiterungsschaltungsstruktur 114 weist jedoch den Vorteil auf, dass sämtliche Ports für das Zuführen der Cross-Connect-WDM-Signale von den jeweils anderen Ports auf einer einzigen Baugruppe ausgebildet sein können.

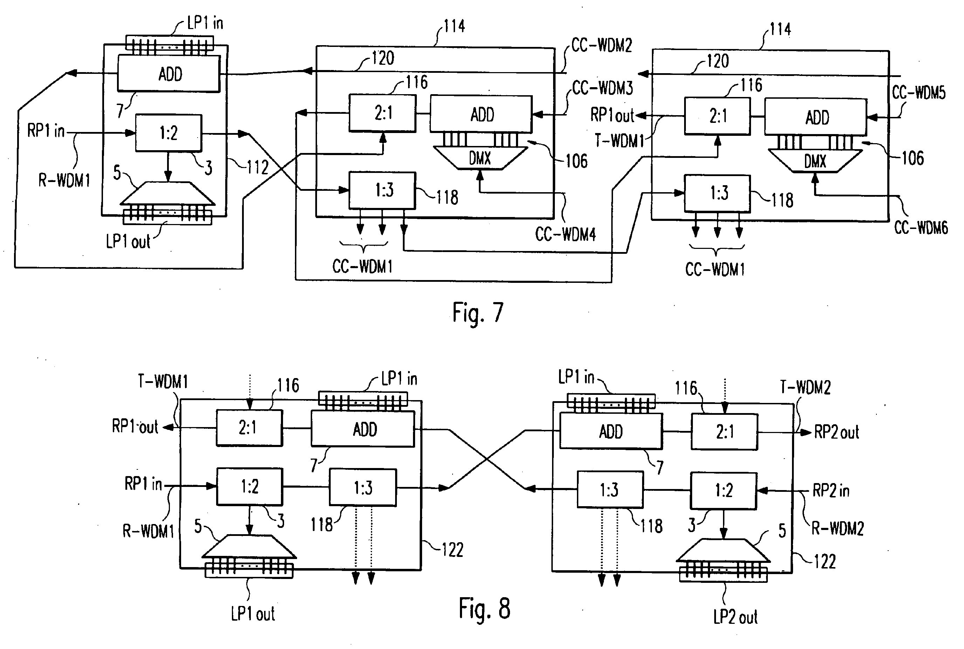

In Fig. 7 ist eine Schaltungsstruktur zur Realisierung eines Remote-Ports, nämlich des Remote-Ports RP1, und des zugehörigen Local-Ports, nämlich des Local-Ports LP1, zur Realisierung eines Knotens der Ordnung fünf oder sechs dargestellt. Für die übrigen Remote-Ports RP2 bis RP6 bzw. für die übrigen Local-Ports LP2 bis LP6 sind wiederum identische Strukturen vorzusehen, die in der nachstehend erläuterten Weise zu verschalten sind.

Die in Fig. 7 gezeigte Schaltungstruktur umfasst in identischer Weise die Schaltungsstruktur gemäß Fig. 6 zur Realisierung eines Knotens der Ordnung drei oder vier. Zusätzlich ist zur Realisierung jedes Remote-Ports RP1 bis RP5 eine weitere Erweiterungsschaltungsstruktur 114 hinzugefügt.

Soll somit ein Knoten der Ordnung zwei auf einen Knoten der Ordnung fünf oder sechs erweitert werden, so ist für jeden zusätzlichen Port zunächst eine Basisschaltungsstruktur 112 vorzusehen. Des Weiteren müssen für jeden Remote-Port zwei zusätzlich Erweiterungsschaltungsstrukturen 114 vorgesehen werden.

Die Basisschaltungsstruktur 112 und die erste Erweiterungsschaltungsstruktur 114 sind dabei jeweils identisch zu verschalten wie die Struktur in Fig. 6.

Zusätzlich ist der Ausgangsport der 2:1-Splittereinheit 116 der ersten Erweiterungsschaltungsstruktur 114 mit dem Eingangsport der 2:1-Splittereinheit 116 der zweiten Erweiterungsschaltungsstruktur 114 verbunden. Darüber hinaus ist ein Ausgangsport der 1:3-Splittereinheit 118 der ersten Erweiterungsschaltungsstruktur 114 mit dem Eingangsport der 1:3-Splittereinheit 118 der zweiten Erweiterungsschaltungsstruktur 114 verbunden.

Mit dieser Schaltungsstruktur können somit maximal fünf Cross-Connect-WDM-Signale zu einem einzigen Transmit-WDM-Signal T-WDM1 zusammengefasst werden, welches am Ausgangsport der 2:1-Splittereinheit 116 der zweiten Erweiterungsschaltungsstruktur 114 abgegeben wird. Das Teil-Transmit-WDM-Signal, welches am Ausgang der 2:1-Splittereinheit 116 der ersten Erweiterungsschaltungsstruktur 114 abgegeben wird, wird dem Eingangsport der 2:1-Splittereinheit 116 der zweiten Erweiterungsschaltungsstruktur 114 zugeführt und auf diese Weise mit dem Teil-Transmit-WDM-Signal, welches von der Add-Demultiplex-Einheit 106 der zweiten Erweiterungsschaltungsstruktur 114 erzeugt und dem Eingangsport der 2:1-Splittereinheit 116 der zweiten Erweiterungsschaltungsstruktur 114 zugeführt wird, zu dem am Remote-Port RP1 abgeführten Transmit-WDM-Signal T-WDM1 zusammengefasst.

Da es bei der in Fig. 7 dargestellten Schaltungsstruktur ohnehin nicht mehr möglich ist, sämtliche Eingangsports für die Cross-Connect-WDM-Signale CC-WDM2 bis CC-WDM6 auf einer einzigen Baugruppe vorzusehen, wenn die Erweiterungsschaltungsstrukturen 114 jeweils als separate Baugruppe ausgebildet sind, kann auch auf das Vorsehen eines durchgeschleiften Lichtwellenleiters 120 verzichtet werden. Wie bereits vorstehend ausgeführt, muss das betreffende Cross-Connect-WDM-Signal (in Fig. 7 das Signal CC-WDM2) unmittelbar dem Eingangsport der Add-Einheit 7 der Basisschaltungsstruktur 112 zugeführt werden.

Aus den Fig. 6 und 7 und den vorstehenden Erläuterungen wird deutlich, dass die in Fig. 7 dargestellte Schaltungsstruktur zur Erzeugung von Knoten, die eine um jeweils zwei höhere Ordnung aufweisen, lediglich um jeweils eine weitere Erweiterungsschaltungsstruktur 114 erweitert werden müssen. Dabei ist lediglich der Ausgangsport der 2:1-Splittereinheit 116 der letzten bereits vorhandenen Erweiterungsschaltungsstruktur 114 mit dem Eingangsport der 2:1-Splittereinheit 116 der darauf folgenden Erweiterungsschaltungsstruktur 114 zu verbinden. Zusätzlich muss ein Ausgangsport der 1:3-Splittereinheit 118 der letzten, bereits vorhandenen Erweiterungsschaltungsstruktur 114 mit dem Ausgangsport der 1:3-Splittereinheit 118 der darauf folgenden Erweiterungsschaltungsstruktur 114 verbunden werden. Derartige erweiterte Schaltungsstrukturen sind für jeden der Remote-Ports RP1 bis RP2N vorzusehen, wobei N eine natürliche ganze Zahl ist. Zur Realisierung eines Knotens der Ordnung N mit ungeradzahligem N muss lediglich auf die Komponenten zur Realisierung eines Remote-Ports verzichtet werden. Gleichzeitig bleibt ein Eingangsport, dem ein Cross-Connect-WDM-Signal zugeführt werden kann, auf einer beliebigen der Erweiterungsschaltungsstrukturen 114 oder der betreffenden Basisschaltungsstruktur 112 frei.

Fig. 8 zeigt eine Schaltungsstruktur zur Realisierung eines Knotens zweiter Ordnung, wobei der so realisierte Knoten zweiter Ordnung so gebildet ist, dass er unterbrechungsfrei auf einen Knoten höherer Ordnung erweitert werden kann. Hierzu besteht die in Fig. 8 dargestellte Schaltungsstruktur aus zwei identischen Basisschaltungsstrukturen 122, die, ebenso wie die in Fig. 5 dargestellte Basisschaltungsstruktur 112 eine Add-Einheit 107 und eine 1:2-Splittereinheit 3 aufweisen, wobei der eine Ausgangsport der Splittereinheit 3 mit dem Eingangsport einer Demultiplex-Einheit 5 verbunden ist. Die Ausgangsports LP1out und LP2out der Local-Ports LP1 und LP2 sind somit in gleicher Weise realisiert, wie bei den Basisschaltungsstrukturen 112 gemäß Fig. 5.

Zusätzlich weist die in Fig. 8 dargestellte Basisschaltungsstruktur 122 eine 2:1-Splittereinheit 116 auf, deren einer Eingangsport mit dem Ausgangsport der Add-Einheit 7 verbunden ist. Der zweite Eingangsport der 2:1-Splittereinheit 116 bleibt bei der Realisierung eines Knotens zweiter Ordnung ungenutzt und kann erforderlichenfalls in definierter Weise terminiert sein.

Darüber hinaus weist die Basisschaltungsstruktur 122 eine 1:3-Splittereinheit 118 auf, deren Eingangsport mit einem der Ausgangsports der 1:2-Splittereinheit 3 verbunden ist. Wie in Fig. 8 dargestellt, bleiben bei der Realisierung eines Knotens zweiter Ordnung zwei der Ausgangsports der 1:3-Splittereinheit ungenutzt.

Mit den beiden in Fig. 8 dargestellten Basisschaltungsstrukturen 122, die wiederum als eigenständige Baugruppen ausgebildet sein können oder Bestandteile eigenständiger Baugruppen sein können, kann ein Knoten zweiter Ordnung dadurch realisiert werden, dass jeweils die Ausgangsports der 1:3-Splittereinheiten 118 mit dem Eingansport der Add-Einheit 7 der jeweils anderen Basisschaltungsstruktur 122 verbunden wird. Die Transmit-WDM-Signale T-WDM1 und T-WDM2 werden dabei am Ausgangsport der 2:1-Splittereinheiten 116 abgegeben, die jeweils den Ausgang RP1out bzw. RP2out der Remote-Ports RP1 bzw. RP2 bilden. Die Eingangsseiten RP1in und RP2in der Remote-Ports RP1 und RP2 werden durch die Eingangsports der 1:2-Splittereinheiten 3 gebildet, welchen jeweils das Remote-WDM-Signal R-WDM1 bzw. R-WDM2 zugeführt ist.

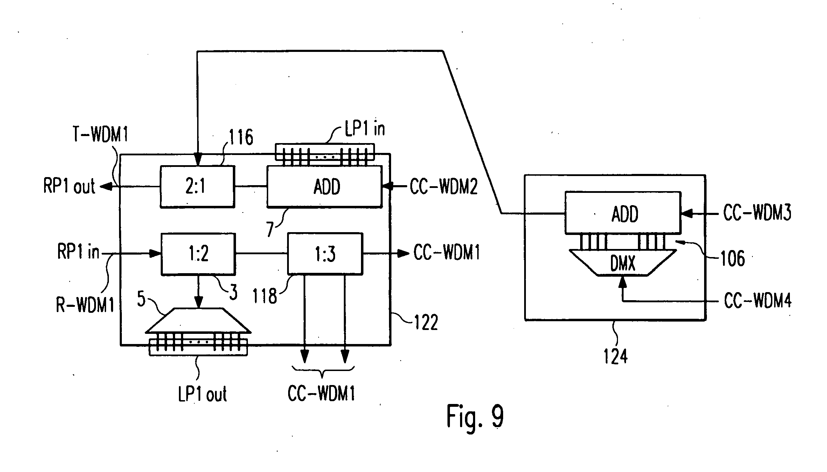

Die in Fig. 8 dargestellte Schaltungsstruktur für einen Knoten der Ordnung zwei lässt sich, wie in Fig. 9 gezeigt, unterbrechungsfrei zu einem Knoten der Ordnung drei oder vier erweitern. Hierzu wird zunächst für jeden zusätzlichen Port eine weitere Basisschaltungsstruktur 122 vorgesehen. Zusätzlich wird für jeden der drei oder vier Ports eine Erweiterungsschaltungsstruktur 124 hinzugefügt, welche lediglich eine Add-Demultiplex-Einheit 106 umfasst. Die Erweiterungsschaltungsstruktur 124 kann, ebenso wie die Basisschaltungsstruktur 122 als separate Baugruppe ausgebildet sein. Fig. 9 zeigt dabei die Schaltungsstruktur eines auf die Ordnung drei oder vier erweiterten Knotens für lediglich einen einzigen Port. Für die jeweils anderen Ports sind identische Schaltungsstrukturen vorzusehen, die dann in der nachstehend beschriebenen Weise zu verbinden sind. Die Erweiterung kann erfolgen, ohne dass die in Fig. 8 dargestellte Struktur für einen Knoten zweiter Ordnung zeitweise aufgelöst, d.h. unterbrochen wird.

Zunächst ist der Ausgangsport der Add-Demultiplex-Einheit 106 jeder Erweiterungsschaltungsstruktur 124 mit dem freien Eingangsport der 2:1-Splittereinheit der zugehörigen Basisschaltungsstruktur 122 zu verbinden. Schließlich sind die von jeder, einen Remote-Port realisierenden Schaltungsstruktur gemäß Fig. 9, die mittels der 1:3-Splittereinheiten 118 erzeugten Cross-Connect-WDM-Signale mit den zugehörigen Eingangsports der die jeweils anderen Remote-Ports (und selbstverständlich auch zugehörigen Local-Ports) realisierenden Schaltungsstrukturen gemäß Fig. 9 zu verbinden. Hierbei handelt es sich um die beiden Eingangsports der Add-Demultiplex-Einheit 106 der Erweiterungsschaltungsstruktur 124 und den Eingangsport der Add-Einheit 7 der Basisstruktur 122. Um eine unterbrechungsfreie Erweiterung zu ermöglichen, dürfen selbstverständlich die bereits belegten Eingangsports der Add-Einheiten 7 der beiden Basisschaltungsstrukturen 122, die den Knoten zweiter Ordnung realisiert haben, nicht gelöst werden. Da die vorstehend beschriebenen Eingangsports der Add-Einheit 7 und der Add-Demultiplex-Einheit 106 einer Schaltungsstruktur gemäß Fig. 9 jedoch untereinander gleichberechtigt sind, können die jeweils freien Eingangsports der Erweiterungs-Schaltungsstruktur 124 bzw. der Add-Demultiplex-Einheit 106 benutzt werden.

Die erforderlichen Cross-Connect-WDM-Signale CC-WDM1 bis CC-WDM4 werden dabei jeweils von den 1:3-Splittereinheiten 118 der Basisschaltungsstruktur 122 jeder einen Remote-Port bzw. Local-Port realisierenden, identischen Schaltungsstruktur gemäß Fig. 9 erzeugt.

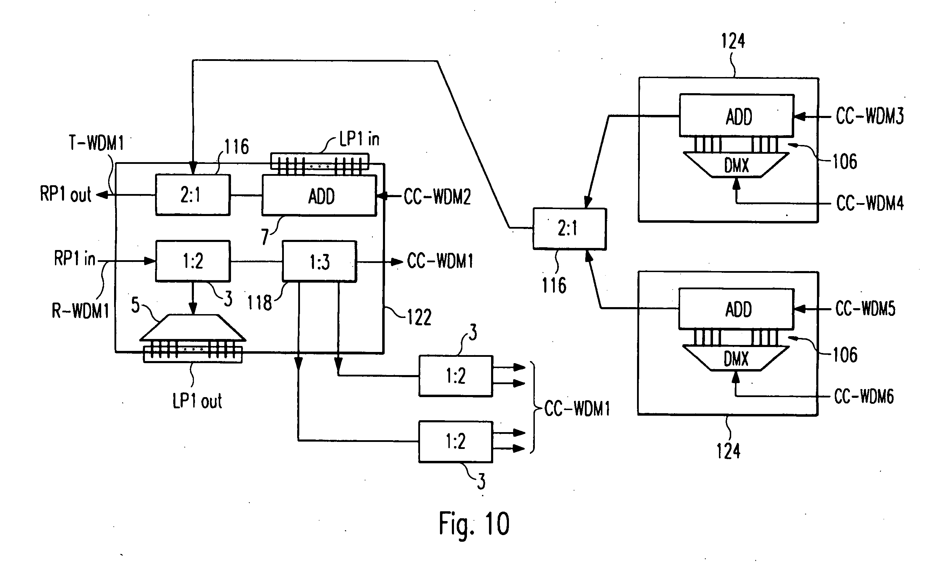

Fig. 10 zeigt eine Schaltungsstruktur zur Realisierung eines Knotens der Ordnung fünf oder sechs, wobei dieser Knoten durch die unterbrechungsfreie Erweiterung eines Knotens zweiter Ordnung gemäß Fig. 8 realisiert werden kann.

Zu einer derartigen Erweiterung ist zunächst für jeden zusätzlichen Remote-Port, d.h. für jede zusätzliche Ordnung größer als zwei eine zusätzliche Basisschaltungsstruktur 122 vorzusehen. Jede einen Remote-Port bzw. einen zugehörigen Local-Port realisierende Schaltung des erweiterten Knotens der Ordnung fünf oder sechs entsteht, wie in Fig. 10 dargestellt, durch das Hinzufügen zweier Erweiterungsschaltungsstrukturen 124 sowie durch das Hinzufügen zweier 1:2-Splittereinheiten drei und das Hinzufügen einer 2:1-Splittereinheit 116, die entsprechend der Darstellung in Fig. 10 zu verschalten sind. Hierzu werden die Ausgangsports der Add-Demultiplex-Einheiten 106 der hinzugefügten Erweiterungsschaltungsstrukturen 124 mit den Eingangsports der 2: 1-Splittereinheit 116 verbunden. Der Ausgangsport der 2:1-Splittereinheit 116 ist mit dem freien Eingangsport der 2:1-Splittereinheit 116 der zugehörigen Basisschaltungsstruktur 122 zu verbinden. Schließlich sind zwei der drei Ausgangsports der 1:3-Splittereinheiten 118 der Basisschaltungsstrukturen 122 mit den Eingangsports der hinzugefügten 1:2-Splittereinheiten 3 zu verbinden. Im Fall der Basisschaltungsstrukturen 122, die den bereits vorhandenen, zu erweiternden Knoten zweiter Ordnung realisieren, sind selbstverständlich die beiden freien Ausgangsports der 1:3-Splittereinheiten 118 der Basisschaltungsstrukturen 122 zu verwenden, um ein unterbrechungsfreies Erweitern zu ermöglichen.

An den Ausgangsports der hinzugefügten 1:2-Splittereinheiten 3 und dem weiteren Ausgangsport der 1:3-Splittereinheit 118 jeder Basisschaltungsstruktur 122 werden die Cross-Connect-WDM-Signale CC-WDM1 bis CC-WDM6 erzeugt. Diese Cross-Connect-WDM-Signale sind den gleichberechtigten Eingangsports der Add-Demultiplex-Einheiten 106 der Erweiterungsschaltungsstrukturen 124 und dem Eingangsport der Add-Einheit 7 der Basisschaltungsstruktur 122 der Schaltungsstrukturen zur Realisierung der jeweils anderen Remote-Ports gemäß Fig. 10 zu verbinden. Dementsprechend sind bei der in Fig. 10 dargestellten Schaltungsstruktur, die den Remote-Port RP1 realisiert, das Cross-Connect-WDM-Signal CC-WDM2 dem Eingangsport der Add-Einheit 7 der Basisschaltungsstruktur 122, und die Cross-Connect-WDM-Signale CC-WDM3 bis CC-WDM6 den Eingangsports der Add-Demultiplex-Einheiten 106 der beiden zusätzlichen Erweiterungsschaltungsstrukturen 124 zugeführt. Das Signal CC-WDM2 war bereits bei der zu erweiternden Schaltungsstruktur für den Knoten zweiter Ordnung mit dem Eingangsport der Add-Einheit 7 der Basisschaltungsstruktur 122 verbunden und darf zur Realisierung einer unterbrechungsfreien Erweiterung nicht anderweitig belegt werden. Entsprechendes gilt für die analoge Schaltungsstruktur, die den Remote-Port RP2 realisiert. In diesem Fall ist das Signal CC-WDM1 der betreffenden Add-Einheit 7 der Basisschaltungsstruktur 122 verbunden und darf zur Erweiterung nicht gelöst werden.

Selbstverständlich kann bei der in Fig. 10 dargestellten Struktur anstelle zweier 1:2-Splittereinheiten auch eine einzige 1:4-Splittereinheit verwendet werden. Allerdings sind in diesem Fall die optischen Verluste größer, sofern innerhalb der Basisschaltungsstruktur 122 nach wie vor eine 1:3-Splittereinheit 118 verwendet wird. Eine unterbrechungsfreie Erweiterung kann jedoch mit jeder beliebigen 1:n-Splittereinheit mit n größer oder gleich zwei realisiert werden, da in diesem Fall die bereits vorhandene Struktur zur Realisierung eines Knotens zweiter Ordnung nicht verändert werden muss.

Des Weiteren kann anstelle einer 2: 1-Splittereinheit 116 für die Basisschaltungsstruktur 122 auch eine m:1-Splittereinheit mit m größer oder gleich verwendet werden. Beispielsweise kann die in Fig. 10 separat hinzugefügte 2:1-Splittereinheit 116 in die Basisschaltungsstruktur 122 integriert werden, wenn anstelle der 2:1-Splittereinheit 116 eine 3: 1-Splittereinheit verwendet wird.

In analoger Weise lassen sich Knoten mit einer jeweils um zwei höheren Ordnung realisieren, wenn zu der in Fig. 10 dargestellten Struktur jeweils eine zusätzliche Erweiterungsschaltungstruktur 124 hinzugefügt und jeweils zwei zusätzliche, vollständige Schaltungsstrukturen gemäß Fig. 10 zur Realisierung der zwei zusätzlichen Ports vorgesehen werden. Die von den Add-Demultiplex-Einheiten 106 erzeugten Teil-Transmit-WDM-Signale können dann durch eine Splittereinheit mit einer geeigneten Anzahl von Eingangsports zusammengefasst und über den Ausgangsport dieser Splittereinheit dem Eingangsport der 2:1-Splittereinheit 116 der Basisschaltungsstruktur 122 zugeführt werden. Selbstverständlich kann anstelle einer einzigen Splittereinheit für das Zusammenfassen der Teil-Transmit-WDM-Signale auch eine aus mehreren Splittereinheiten bestehende, kaskadenartig aufgebaute Splittereinheit mit einer geeigneten Anzahl von Eingangsports verwendet werden.

## Patentansprüche

1. Optische Schaltungsstruktur zur Realisierung eines Knotens höherer Ordnung in einem optischen Übertragungsnetzwerk,
(a) mit einer Anzahl N bidirektionaler Remote-Ports (RP1 ... RPN), wobei jedem Remote-Port (RP1 ... RPN) ein optisches Receive-Wellenlängenmultiplexsignal (R-WDM1 ... R-WDMN) mit einem Satz von optischen Receive-Kanälen zuführbar und wobei von jedem Remote-Port (RP1 ... RPN) ein optisches Transmit-Wellenlängenmultiplexsignal (T-WDM1 ... T-WDMN) mit einem Satz von optischen Transmit-Kanälen abführbar ist, wobei jedem Receive-Kanal oder Transmit-Kanal eine optische Mittenwellenlänge zugeordnet ist und wobei die Anzahl N größer oder gleich Drei ist,
(b) mit einer Anzahl M bidirektionaler Local-Ports (LP 1 ... LPN), wobei M größer oder gleich Eins und kleiner oder gleich N ist, wobei jeder Local-Port (LP1 ... LPN) genau einem bestimmten Remote-Port (RP1 ... RPN) zugeordnet ist und wobei jedem Local-Port (LP1 ... LPN) ein oder mehrere optische Add-Kanäle zuführbar und von jedem Local-Port (LP1 ... LPN) ein oder mehrere optische Drop-Kanäle abführbar sind,
(c) mit optischen Drop-Kanal-Mitteln (102) zum Zuführen aller oder ausgewählter optischer Kanäle eines einem bestimmten Remote-Port (RP1 ... RPN) zugeführten Receive-Wellenlängenmultiplexsignals (R-WDM1 ... R-WDMN) als Drop-Kanäle zu dem betreffenden Local-Port (LP1out ... LPNout),
(d) mit optischen Add- und Cross-Connect-Mitteln (7, 106), welche so ausgebildet und konfigurierbar sind, dass zum Erzeugen des Transmit-Wellenlängenmultiplexsignals (T-WDM1 ... T-WDMN) für jeden der N Remote-Ports (RP1 ... RPN) jeweils aus den Receive-Wellenlängenmultiplexsignalen (R-WDM1 ... R-WDMN) mehrerer oder sämtlicher der anderen Remote-Ports (RP1 ... RPN) bestimmte Receive-Kanäle als Pass-through-Kanäle extrahiert werden und zusammen mit den diesem Remote-Port (RP1 ... RPN) zugeführten Add-Kanälen zu dem von dem betreffenden Remote-Port (RP 1 ... RPN) abführbaren Transmit-Wellenlängenmultiplexsignal (T-WDM1 ... T-WDMN) zusammengefasst werden,
**dadurch gekennzeichnet,**
(e) **dass** die optischen Drop-Kanal-Mittel (102) und die optischen Add- und Cross-Connect-Mittel (7, 106) ausschließlich optische Splittereinheiten (102), optische Demultiplexeinheiten und optische Add-Einheiten (7) umfassen,
(f) wobei eine optische Add-Einheit (7) einen mit einem Eingangsport (7a) für ein Wellenlängenmultiplexsignal verbundene optische Wellenlängendemultiplexeinheit (9), eine mit einem Ausgangsport (7b) für ein Wellenlängenmultiplexsignal verbundene Wellenlängenmultiplexeinheit (15) und optische 2x1-Schalter (11) aufweist, wobei die die einzelnen Kanäle führenden Kanal-Ausgangsports der Wellenlängendemultiplexeinheit (9) jeweils mit einem ersten Eingangsport jeweils eines der optischen 2x1-Schalter (11) verbunden sind, wobei jeweils einem zweiten Eingangsport der optischen 2x1-Schalter jeweils ein einzelner weiterer Kanal zuführbar ist, so dass mittels jedes der optischen 2x1-Schalter (11) entweder der betreffende gedemultiplexte Kanal oder der betreffende weitere Kanal über den Ausgangsport des 2x1-Schalters (11) dem betreffenden Kanal-Eingangsport der Wellenlängenmultiplexeinheit (15) zuführbar ist, wodurch am Ausgangsport (7b) ein entsprechend kombiniertes Wellenlängenmultiplexsignal erzeugt wird,
(g) **dass** die Schaltungsstruktur optische Leistungssplittereinheiten (102) aufweist und dass zur Erzeugung der Drop-Kanäle für jeden der M Local-Ports (LP1 ... LPN) ein mittels einer optischen Leistungssplittereinheit (102) aus dem Receive-Wellenlängenmultiplexsignal (R-WDM1 ... R-WDMN) des jeweils zugeordneten Remote-Ports (RP1 ... RPN) erzeugtes Teilsignal dem betreffenden Local-Port (LP1 ... LPN) zugeführt wird,
(h) **dass** zur Erzeugung jedes Transmit-Wellenlängenmultiplexsignals (T-WDM1 ... T-WDMN) für einen bestimmten Remote-Port (RP1 ... RPN) mittels jeweils einer der optischen Leistungssplittereinheiten (102) aus den Receive-Wellenlängenmultiplexsignalen der mehreren oder aller anderen Remote-Ports (RP1 ... RPN) erzeugte Teilsignale als Cross-Connect-Wellenlängenmultiplexsignale (CC-WDM1 ... CC-WDMN) in Richtung auf den bestimmten Remote-Port geführt werden und dass zusätzlich die Add-Kanäle, die einem dem bestimmten Remote-Port zugeordneten Local-Port zugeführt sind, in Richtung auf den bestimmten Remote-Port geführt sind,
(i) **dass** die Schaltungsstruktur so ausgebildet ist, dass abhängig von der Anzahl der Cross-Connect-Wellenlängenmultiplexsignale (CC-WDM1 ... CC-WDMN) ein oder mehrere Teil-Transmit-Wellenlängenmultiplexsignale für den bestimmten Remote-Port (RP1 ... RPN) entsprechend einer oder mehrerer der folgenden Möglichkeiten erzeugt werden:
(i) Jeweils zwei der Cross-Connect-Wellenlängenmultiplexsignale (CC-WDM1 ... CC-WDMN) werden mittels einer Kombination (106) aus einer Add-Einheit (7) und einer Demultiplexeinheit zu einem Teil-Transmit-Wellenlängenmultiplexsignal zusammengefasst, wobei eines der Cross-Connect-Wellenlängenmultiplexsignale (CC-WDM1 ... CC-WDMN) dem Eingangsport der Add-Einheit (7) und das andere der Cross-Connect-Wellenlängenmultiplexsignale (CC-WDM1 ... CC-WDMN) dem Eingang der Demultiplexeinheit zugeführt ist, wobei die ausgangsseitig von der Demultiplexeinheit erzeugten Kanäle jeweils dem zweiten Eingangsport der 2x 1-Schalter (11) zugeführt sind;
(ii) Ein Cross-Connect-Wellenlängenmultiplexsignal (CC-WDM1 ... CC-WDMN) und/oder die vorhandenen Add-Kanäle werden mittels einer Add-Einheit (7) zu einem Teil-Transmit-Wellenlängenmultiplexsignal zusammengefasst;
(iii) Ein einziges Cross-Connect-Wellenlängenmultiplexsignal (CC-WDM1 ... CC-WDMN) wird mittels einer Add-Einheit (7) in ein Teil-Transmit-Wellenlängenmultiplexsignal umgesetzt; und
(j) **dass** die Schaltungsstruktur eine optische Splittereinheit (110) aufweist, und das die mehreren Teil-Transmit-Wellenlängenmultiplexsignale mittels der optischen Splittereinheit (110) zu dem von dem bestimmten Remote-Port (RP1 ... RPN) abführbaren Transmit-Wellenlängenmultiplexsignal (T-WDM1 ... T-WDMN) kombiniert werden.

2. Optische Schaltungsstruktur nach Anspruch 1, **dadurch gekennzeichnet, dass** die optischen Add-Einheiten (7) jeweils eine identisch Struktur aufweisen, wobei die Anzahl und spektrale Lage der Kanäle der von den Add-Einheiten (7) umfassten Demultiplexeinheiten (9) identisch ist.

3. Optische Schaltungsstruktur nach Anspruch 1 oder 2, **dadurch gekennzeichnet, dass** die Receive-Wellenlängenmultiplexsignale (R-WDM1 ... R-WDMN) aller anderen Remote-Ports (RP1 ... RPN) als Cross-Connect-Wellenlängenmultiplexsignal (CC-WDM1 ... CC-WDMN) zur Erzeugung des Transmit-Wellenlängenmultiplexsignals (T-WDM1 ... T-WDMN) für einen bestimmten Remote-Port (RP1 ... RPN) verwendet werden.

4. Optische Schaltungsstruktur nach Anspruch 3, **dadurch gekennzeichnet, dass** die N-1 Cross-Connect-Wellenlängenmultiplexsignale (CC-WDM1 ... CC-WDMN) mittels N optischer 1:(N-1)-Splittereinheiten erzeugt werden, welchen jeweils das Receive-Wellenlängenmultiplexsignal (R-WDM1 ... R-WDMN) eines Remote-Ports (RP1 ... RPN) zugeführt ist.

5. Optische Schaltungsstruktur nach einem der vorhergehenden Ansprüche, **dadurch gekennzeichnet, dass** die Anzahl M der Local-Ports (LP1 ... LPN) gleich der Anzahl N der Remote-Ports (RP1 ... RPN) ist.

6. Optische Schaltungsstruktur nach Anspruch 5 bei einem Rückbezug auf Anspruch 3, **dadurch gekennzeichnet, dass** die N-1 Cross-Connect-Wellenlängenmultiplexsignale (CC-WDM1 ... CC-WDMN) mittels N optischer 1:N-Splittereinheiten erzeugt werden, welchen jeweils das Receive-Wellenlängenmultiplexsignal (R-WDM1 ... R-WDMN) eines Remote-Ports (RP1 ... RPN) zugeführt ist.

7. Optische Schaltungsstruktur nach einem der vorhergehenden Ansprüche, **dadurch gekennzeichnet, dass** das einem Local-Port (LP1 ... LPN) zugeführte Receive-Wellenlängenmultiplexsignal (R-WDM1 ... R-WDMN) des zugeordneten Remote-Ports (RP1 ... RPN) mittels einer Wellenlängendemultiplexeinheit in die einzelnen Drop-Kanäle gedemultiplext wird.

8. Optische Schaltungsstruktur nach einem der vorhergehenden Ansprüche, **dadurch gekennzeichnet, dass** die optische Splittereinheit (110) zum Zusammenfassen der Teil-Transmit-Wellenlängenmultiplexsignale kaskadenartig aus mehreren optischen Splittereinheiten niedrigerer Ordnung aufgebaut ist, vorzugsweise aus optischen 2:1-Splittereinheiten (116).

9. Optische Erweiterungsschaltungsstruktur (114) zur Erweiterung einer optischen Schaltungsstruktur zur Realisierung eines Knotens mindestens zweiter Ordnung zu einer optischen Schaltungsstruktur nach einem der vorhergehenden Ansprüche,
(a) wobei die optische Schaltungsstruktur zur Realisierung des Knotens zweiter Ordnung für jeden der zwei Remote-Ports eine optische Basisschaltungsstruktur (112) aufweist, welche eine 1:2-Splittereinheit (3) zur Erzeugung der Drop-Kanäle und des Cross-Connect-Wellenlängenmultiplexsignals (CC-WDM1, CC-WDM2) aus dem Receive-Wellenlängenmultiplexsignal (R-WDM1, R-WDM2) des betreffenden Remote-Ports (RP1, RP2) für den jeweils anderen Remote-Port (RP1, RP2) umfasst sowie eine Add-Einheit (7), welcher die Add-Kanäle für den betreffenden Remote-Port (RP1, RP2) und das Cross-Connect-Wellenlängenmultiplexsignal (CC-WDM1, CC-WDM2) zugeführt ist und welche hieraus das Transmit-Wellenlängenmultiplexsignal (T-WDM1, T-WDM2) für den betreffenden Remote-Port (RP1, RP2) erzeugt,
**dadurch gekennzeichnet,**
(b) **dass** die Erweiterungsschaltungsstruktur (114) eine Kombination (106) aus einer Add-Einheit und einer Demultiplexeinheit zur Erzeugung des Transmit-Wellenlängenmultiplexsignals oder eines Teil-Transmit-Wellenlängenmultiplexsignals aufweist, wobei ein erstes der Cross-Connect-Wellenlängenmultiplexsignale (CC-WDM1 ... CC-WDMN) dem Eingangsport der Add-Einheit zugeführt ist und ein zweites der Cross-Connect-Wellenlängenmultiplexsignale (CC-WDM1 ... CC-WDMN) dem Eingangsport der Demultiplexeinheit zugeführt ist, wobei die ausgangsseitig von der Demultiplexeinheit erzeugten Kanäle jeweils einem zweiten Eingangsport der 2x1-Schalter (11) zugeführt sind,
(c) **dass** die Erweiterungsschaltungsstruktur (114) eine optische 2:1-Splittereinheit (116) umfasst, wobei ein Eingangsport der Splittereinheit mit dem Ausgangsport der Add-Einheit verbunden ist, und
(d) **dass** die Erweiterungsschaltungsstruktur eine optische 1:3-Splittereinheit (118) umfasst.

10. Optische Schaltungsstruktur für einen Knoten der Ordnung drei oder vier unter Verwendung optischer Erweiterungsschaltungsstrukturen nach Anspruch 9, **dadurch gekennzeichnet,**
(a) **dass** für jeden der drei oder vier Remote-Ports (RP1 ... RP4) der optischen Schaltungsstruktur eine optische Basisschaltungsstruktur (112) und eine optische Erweiterungsschaltungsstruktur (114) nach Anspruch 9 vorgesehen ist,
(b) **dass** zur Erzeugung des Transmit-Wellenlängenmultiplexsignals (T-WDM1 ... T-WDM4) für jeden Remote-Port (RP1 ... RP4)
(i) der Add-Einheit (7) der Basisschaltungsstruktur (112) ein erstes Cross-Connect-Wellenlängenmultiplexsignal (CC-WDM1 ... CC-WDM4) und, falls im betreffenden Knoten vorhanden, auch die Add-Kanäle des betreffenden Local-Ports (LP1 ... LP4) zugeführt sind,
(ii) dem Eingangsport der Add-Einheit oder dem Eingangsport der Demultiplexeinheit der Erweiterungsschaltungsstruktur (114) ein zweites Cross-Connect-Wellenlängenmultiplexsignal (CC-WDM1 ... CC-WDM4) zugeführt ist, und
(iii) im Fall eines Knotens vierter Ordnung dem Eingangsport der Demultiplexeinheit oder dem Eingangsport der Add-Einheit der Erweiterungsschaltungsstruktur ein drittes Cross-Connect-Wellenlängenmultiplexsignal (CC-WDM1 ... CC-WDM4) zugeführt ist und
(iv) der Ausgangsport der Add-Einheit (7) der Basisschaltungsstruktur (112) mit einem Eingangsport der 2:1-Splittereinheit (116) der Erweiterungsschaltungsstruktur (114) verbunden ist,
(v) wobei das Transmit-Wellenlängenmultiplexsignal (T-WDM1 ... T-WDM4) für den betreffenden Remote-Port (RP1 ... RP4) am Ausgangsport der 2:1-Splittereinheit (116) anliegt,
(c) **dass** der Ausgangsport der 1:2-Splittereinheit (3) der Basisschaltungsstruktur (112) mit dem Eingangsport der 1:3-Splittereinheit (118) der Erweiterungsschaltungsstruktur (114) verbunden ist, und
(d) **dass** das an den Ausgangsports der 1:3-Splittereinheit (118) der Erweiterungsschaltungsstruktur erzeugte Cross-Connect-Wellenlängenmultiplexsignal (CC-WDM1 ... CC-WDM4) jeweils in Richtung auf die anderen Remote-Ports (RP1 ... RP4) geführt ist.

11. Optische Schaltungsstruktur für einen Knoten der Ordnung fünf oder sechs unter Verwendung optischer Erweiterungsschaltungsstrukturen nach Anspruch 9, **dadurch gekennzeichnet,**
(a) **dass** die Schaltungsstruktur für einen Knoten vierter Ordnung nach Anspruch 10 zur Schaffung des einen oder der zwei zusätzlichen Remote-Ports (RP5, RP6) pro zusätzlichem Remote-Port (RP5, RP6) zunächst um eine Basisschaltungsstruktur (112) und eine Erweiterungsschaltungsstruktur (114) ergänzt ist, wobei die Schaltungsstruktur für jeden Remote-Port (RP1 ... RP6) der Schaltungsstruktur pro Remote-Port (RP1 ... RP6) der Schaltungsstruktur nach Anspruch 10 entspricht, und
(b) **dass** die so erweiterte Schaltungsstruktur für jeden Remote-Port (RP1 ... RP6) um eine zweite Erweiterungsschaltungsstruktur (114) ergänzt ist,
(c) **dass** zur Erzeugung des Transmit-Wellenlängenmultiplexsignals (T-WDM 1 ... T-WDM6) für jeden Remote-Port (RP1 ... RP6) am Ausgangsport der 2:1-Splittereinheit (116) der zweiten Erweiterungsschaltungsstruktur (114),
(i) der Ausgangsport der 2: 1-Splittereinheit (116) der ersten Erweiterungsschaltungsstruktur (114) mit dem Eingangsport der 2:1-Splittereinheit (116) der zweiten Erweiterungsschaltungsstruktur (114) verbunden ist und dementsprechend das Transmit-Wellenlängenmultiplexsignal der Schaltungsstruktur nach Anspruch 10 als Teil-Transmit-Wellenlängenmultiplexsignal verwendet wird,
(ii) dem Eingangsport der Add-Einheit oder dem Eingangsport der Demultiplexeinheit der zweiten Erweiterungsschaltungsstruktur (114) ein viertes Cross-Connect-Wellenlängenmultiplexsignal (CC-WDM5, CC-WDM6) zugeführt ist, und
(iii) im Fall eines Knotens sechster Ordnung dem Eingangsport der Demultiplexeinheit oder dem Eingangsport der Add-Einheit der zweiten Erweiterungsschaltungsstruktur (114) ein fünftes Cross-Connect-Wellenlängenmultiplexsignal (CC-WDM5, CC-WDM6) zugeführt ist und
(d) **dass** ein Ausgangsport der 1:3-Splittereinheit (118) der ersten Erweiterungsschaltungsstruktur (114) mit dem Eingangsport der 1:3-Splittereinheit (118) der zweiten Erweiterungsschaltungsstruktur (114) verbunden ist, und
(e) **dass** das an übrigen zwei Ausgangsports der 1:3-Splittereinheit (118) der ersten Erweiterungsschaltungsstruktur (114) und den drei Ausgangsports der 1:3-Splittereinheit (118) der zweite Erweiterungsschaltungsstruktur (114) erzeugte Cross-Connect-Wellenlängenmultiplexsignal (CC-WDM1 ... CC-WDM6) jeweils in Richtung auf die anderen Remote-Ports (RP1 ... RP6) geführt ist.

12. Optische Schaltungsstruktur für einen Knoten der Ordnung sechs plus 2n, wobei n eine ganze natürliche Zahl ist, unter Verwendung optischer Erweiterungsschaltungsstrukturen nach Anspruch 9, **dadurch gekennzeichnet,**
(a) **dass** die Schaltungsstruktur nach Anspruch 11 pro zusätzlicher Ordnung zur Schaffung der zusätzlichen Remote-Ports (RP7 ... RP(6+2n)) zunächst um eine Basisschaltungsstruktur (112) und zwei Erweiterungsschaltungsstrukturen (114) ergänzt ist, wobei die Schaltungsstruktur für jeden Remote-Port (RP1 ... RP(6+2n)) der Struktur pro Remote-Port der Schaltungsstruktur nach Anspruch 11 entspricht, und
(b) **dass** die so erweiterte Schaltungsstruktur für jeden Remote-Port (RP1 ... RP(6+2n)) um eine Anzahl n von Erweiterungsschaltungsstrukturen (114) nach Anspruch 9 ergänzt ist, wobei für jeden Remote-Port (RP1 ... RP(6+2n)) jeweils zwei aufeinanderfolgende Erweiterungsschaltungsstrukturen (114) analog zur Verschaltung der ersten und zweiten Erweiterungsschaltungsstruktur (114) der Schaltungsstruktur nach Anspruch 11 verschaltet sind und wobei das Transmit-Wellenlängenmultiplexsignal (T-WDM1 ... T-WDM(6+2n)) für jeden Remote-Port (RP1 ... RP(6+2n)) in entsprechender Weise am Ausgangsport der 2:1-Splittereinheit (118) der zuletzt hinzugefügten Erweiterungsschaltungsstruktur (114) erzeugt wird.

13. Optische Basisschaltungsstruktur (122) zur Realisierung eines Knotens zweiter Ordnung, der zu einer optischen Schaltungsstruktur nach einem der Ansprüche 1 bis 8 unterbrechungsfrei erweiterbar ist,
(a) mit einer 2:1 Splittereinheit (116) und einer optischen Add-Einheit (7), deren Ausgangsport mit einem ersten Eingangsport der 2: 1-Splittereinheit (116) verbunden ist, wobei der zweite Eingangsport der 2:1-Splittereinheit (116) im Fall der Realisierung eines Knotens zweiter Ordnung ungenutzt bleibt und wobei am Ausgangsport der 2:1-Splittereinheit (116) das Transmit-Wellenlängenmultiplexsignal (T-WDM1, T-WDM2) des betreffenden Ports (RP1, RP2) aus den der Add-Einheit (7), falls im betreffenden Knoten vorhanden, zugeführten Add-Kanälen und dem dem Eingangsport der Add-Einheit (7) zugeführten Cross-Connect-Wellenlängenmultiplexsignal (T-WDM1, T-WDM2) erzeugt wird,
(b) mit einer 1:2-Splittereinheit (3), der jeweils das Receive-Wellenlängenmultiplexsignal (R-WDM1, R-WDM2) des betreffenden Remote-Ports zugeführt ist, wobei an einem Ausgangsport der 1 :2-Splittereinheit (3) die Drop-Kanäle abgeführt werden, und
(c) mit einer 1:m-Splittereinheit (118), deren Eingangsport mit dem anderen Ausgangsport der 1:2-Splittereinheit verbunden ist, wobei m eine natürliche Zahl größer oder gleich zwei ist, und wobei an den Ausgangsports der 1:m-Splittereinheit (118) das Cross-Connect-Wellenlängenmultiplexsignal (CC-WDM1 ... CC-WDMN) für das Zuführen zu weiteren Remote-Ports (RP3 ... RPN) erzeugt wird.

14. Optische Schaltungsstruktur zur Realisierung eines Knotens zweiter Ordnung, **dadurch gekennzeichnet, dass** für jeden der beiden Remote-Ports (RP1, RP2) der Schaltungsstruktur eine optische Basisschaltungsstruktur (122) nach Anspruch 13 vorgesehen ist und dass jeweils das an einem Ausgangsport der 1:m-Splittereinheit (118) der einen Basisschaltungsstruktur erzeugte Cross-Connect-Wellenlängenmultiplexsignal (CC-WDM1, CC-WDM2) dem Eingangsport der Add-Einheit (7) der jeweils anderen Basisschaltungsstruktur (122) zugeführt ist.

15. Optische Schaltungsstruktur zur Realisierung eines Knotens dritter oder vierter Ordnung, **dadurch gekennzeichnet,**
(a) **dass** zu einer optischen Schaltungsstruktur nach Anspruch 14 für jeden weiteren Remote-Port (RP3, RP4) eine Basisschaltungsstruktur (122) nach Anspruch 13 hinzugefügt ist, wobei jeder Add-Einheit (7) einer hinzugefügten Basisschaltungsstruktur (122) das an einem Ausgang der 1:m-Splittereinheit (118) einer der anderen Basisschaltungsstrukturen (122) erzeugte Cross-Connect-Wellenlängenmultiplexsignal (CC-WDM1 ... CC-WDM4) zugeführt ist, und
(b) **dass** für jeden Remote-Port (RP1 ... RP4) eine Erweiterungsschaltungsstruktur (124) hinzugefügt ist, bestehend aus einer Kombination (106) einer weiteren Add-Einheit, welche mit einer Demultiplexeinheit derart kombiniert ist, dass die Demultiplex-Ausgangsports der Demultiplexeinheit mit den Eingangsports der 2x1-Schalter (11) der Add-Einheit verbunden sind, wobei der Ausgangsport der Erweiterungsschaltungsstruktur (124) mit dem freien Eingangsport der 2: 1-Splittereinheit (116) der Basisschaltungsstruktur (122) verbunden ist,
(c) wobei für jeden Remote-Port (RP1 ... RP4) dem Eingangsport der Add-Einheit und/oder dem Eingangsport der Demultiplexeinheit der Erweiterungsschaltungsstruktur (124) ein zweites oder drittes Cross-Connect-Wellenlängenmultiplexsignal (CC-WDM1 ... CC-WDM4) von einem der Ausgangsports der 1:m-Splittereinheiten (118) der Basisschaltungsstrukturen (122) der jeweils anderen Remote-Ports (RP1 ... RP4) zugeführt sind.

16. Optische Schaltungsstruktur zur Realisierung eines Knotens der Ordnung N größer oder gleich 5, **dadurch gekennzeichnet,**
(a) **dass** zu einer optischen Schaltungsstruktur nach Anspruch 14 zunächst für jeden weiteren Remote-Port (RP5 ... RPN) eine Basisschaltungsstruktur (122) nach Anspruch 13 hinzugefügt ist, wobei jeder Add-Einheit (7) einer hinzugefügten Basisschaltungsstruktur (122) das an einem Ausgang der 1:m-Splittereinheit (118) einer der anderen Basisschaltungsstrukturen (122) erzeugte Cross-Connect-Wellenlängenmultiplexsignal (CC-WDM1 ... CC-WDMN) zugeführt ist, und
(b) **dass** für jeden Remote-Port (RP1 ... RPN) für jedes angefangene Paar von hinzugefügten Remote-Ports (RP5 ... RPN) eine Erweiterungsschaltungsstruktur (124) hinzugefügt ist, bestehend aus einer Kombination (106) einer weiteren Add-Einheit, welche derart mit einer Demultiplexeinheit kombiniert ist, dass die Demultiplex-Ausgangsports der Demultiplexeinheit mit den Eingangsports der 2x1-Schalter (11) der Add-Einheit verbunden sind, und
(c) **dass** für jeden der Remote-Ports (RP1 ... RPN) eine n:1-Splittereinheit (116) hinzugefügt ist, wobei die Anzahl n die Anzahl der angefangenen Paare von hinzugefügten Remote-Ports (RP5 ... RPN) bezeichnet,
(d) wobei für jeden Remote-Port (RP1 ... RPN) alle Ausgangsports der Add-Einheiten der hinzugefügten Erweiterungsschaltungsstrukturen (124) mit den Eingangsports der hinzugefügten n: 1-Splittereinheit (116) verbunden sind,
(e) wobei für jeden Remote-Port (RP1 ... RPN) der Ausgangsport der hinzugefügten n:1-Splittereinheit (116) dem zweiten Eingangsport der 2:1-Splittereinheit (116) der Basisschaltungsstruktur (122) zugeführt ist,
(f) wobei für jeden Remote-Port (RP1 ... RPN) den Eingangsports der Add-Einheiten und den Eingangsports der Demultiplexereinheiten der Erweiterungsschaltungsstrukturen jeweils eines der Cross-Connect-Wellenlängenmultiplexsignale (CC-WDM1 ... CC-WDMN) der jeweils anderen Remote-Ports (RP1 ... RPN) zugeführt ist, und
(g) wobei für jeden Remote-Port (RP1 ... RPN) zur Erzeugung des Cross-Connect-Wellenlängenmultiplexsignals (CC-WDM1 ... CC-WDMN) für die jeweils anderen Remote-Ports (RP1 ... RPN) die 1:m-Splittereinheit (118) der betreffenden Basisschaltungsstruktur (122) zu einer 1:(N-1)-Splittereinheit erweitert ist, vorzugsweise durch das Verbinden der Ausgangsports der 1:m-Splittereinheit (118) mit weiteren Splittereinheiten, welche die erforderliche Anzahl von Ausgangsports aufweisen.

## Claims

1. An optical circuit structure for realizing a higher order node in an optical transmission network,
(a) having a number N of bidirectional remote ports (RP1 ... RPN), wherein an optical receive-wavelength multiplex signal (R-WDM1 ... R-WDMN) can be fed with a set of optical receive-channels to each remote port (RP1 ... RPN), and wherein an optical transmit-wavelength multiplex signal (T-WDM1 ... T-WDMN) can be removed with a set of optical transmit-channels from each remote port (RP1 ... RPN), with an optical medium wavelength being assigned to each receive-channel or transmit-channel and with the number N being greater than or equal to three,
(b) having a number M of bidirectional local ports (LP1 ... LPN), with M being greater than or equal to one and smaller than or equal to N, wherein each local port (LP1 ... LPN) is assigned to precisely one specific remote port (RP1 ... RPN) and wherein one or more optical add-channels can be fed to each local port (LP1 ... LPN) and one or more optical drop-channels can be removed from each local port (LP1 ... LPN),
(c) having optical drop-channel means (102) to feed all or selected optical channels of a receive-wavelength multiplex signal (R-WDM1 ... R-WDMN), fed to a specific remote port (RP1 ... RPN), as drop-channels to the relevant local port (LP1out ... LPNout),
(d) having optical add- and cross-connect-means (7, 106) that are formed and can be configured in such a way that in order to generate the transmit-wavelength multiplex signal (T-WDM1 ... T-WDMN) for each of the N remote ports (RP1 ... RPN) respectively from the receive-wavelength multiplex signals (R-WDM1 ... R-WDMN) of a plurality or all of the other remote ports (RP1 ... RPN) specific receive-channels are extracted as pass-through channels and combined together with the add-channels fed to this remote port (RP1 ... RPN) to form the transmit-wavelength multiplex signal (T-WDM1 ... T-WDMN) that can be removed from the relevant remote port (RP1 ... RPN),
**characterised**
(e) **in that** the optical drop-channel means (102) and the optical add- and cross-connect-means (7, 106) comprise exclusively optical splitter units (102), optical demultiplex units and optical add-units (7),
(f) wherein an optical add-unit (7) has an optical wavelength demultiplex unit (9) that is connected to an input port (7a) for a wavelength multiplex signal, a wavelength multiplex unit (15) connected to an output port (7b) for a wavelength multiplex signal, and optical 2x1-switches (11), wherein the channel output ports of the wavelength demultiplex unit (9) guiding the individual channels are in each case connected to a first input port of in each case one of the optical 2x1-switches (11), wherein in each case an individual further channel can be fed in each case to a second input port of the optical 2x1-switches so that by means of each of the optical 2x1-switches (11) either the relevant demultiplexed channel or the relevant further channel can be fed by way of the output port of the 2x1-switch (11) to the relevant channel input port of the wavelength multiplex unit (15), whereby a correspondingly combined wavelength multiplex signal is generated at the output port (7b),
(g) **in that** the circuit structure has optical power-splitter units (102) and in that for the generation of the drop-channels for each of the M local ports (LP1 ... LPN) a partial signal generated by means of an optical power-splitter unit (102) from the receive-wavelength multiplex signal (R-WDM1 ... R-WDMN) of the respectively assigned remote port (RP1 ... RPN) is fed to the relevant local port (LP1 ... LPN),
(h) **in that** in order to generate each transmit-wavelength multiplex signal (T-WDM1 ... T-WDMN) for a specific remote port (RP1 ... RPN) partial signals generated by means of in each case one of the optical power-splitter units (102) from the receive-wavelength multiplex signals of the plurality of or all of the other remote ports (RP1 ... RPN) as cross-connect-wavelength multiplex signals (CC-WDM1 ... CC-WDMN) are guided in the direction of the specific remote port, and in that in addition the add-channels that are fed to a local port assigned to the specific remote port are guided in the direction of the specific remote port,
(i) **in that** the circuit structure is formed in such a way that depending on the number of cross-connect-wavelength multiplex signals (CC-WDM1 ... CC-WDMN) one or more partial transmit-wavelength multiplex signals are generated for the specific remote port (RP1 ... RPN) in accordance with one or more of the following possibilities:
(i) in each case two of the cross-connect-wavelength multiplex signals (CC-WDM1 ... CC-WDMN) are combined by means of a combination (106) of an add-unit (7) and a demultiplex unit to form a partial transmit-wavelength multiplex signal, wherein one of the cross-connect-wavelength multiplex signals (CC-WDM1 ... CC-WDMN) is fed to the input port of the add-unit (7) and the other of the cross-connect-wavelength multiplex signals (CC-WDM1 ... CC-WDMN) is fed to the input of the demultiplex unit, wherein the channels generated on the output side by the demultiplex unit are in each case fed to the second input port of the 2x1-switches (11);
(ii) a cross-connect-wavelength multiplex signal (CC-WDM1 ... CC-WDMN) and/or the add-channels present are combined by means of an add-unit (7) to form a partial transmit-wavelength multiplex signal;
(iii)a single cross-connect-wavelength multiplex signal (CC-WDM1 ... CC-WDMN) is converted into a partial transmit-wavelength multiplex signal by means of an add-unit (7); and
(j) **in that** the circuit structure has an optical splitter unit (110), and the plurality of partial transmit-wavelength multiplex signals are combined by means of the optical splitter unit (110) to form the transmit-wavelength multiplex signal (T-WDM1 ... T-WDMN) that can be removed from the specific remote port (RP1 ... RPN).

2. An optical circuit structure according to claim 1, **characterised in that** the optical add-units (7) in each case have an identical structure, with the number and spectral position of the channels of the demultiplex units (9) covered by the add-units (7) being identical.

3. An optical circuit structure according to claim 1 or 2, **characterised in that** the receive-wavelength multiplex signals (R-WDM1 ... R-WDMN) of all the other remote ports (RP1 ... RPN) are used as the cross-connect-wavelength multiplex signal (CC-WDM1 ... CC-WDMN) for the generation of the transmit-wavelength multiplex signal (T-WDM1 ... T-WDMN) for a specific remote port (RP1 ... RPN).

4. An optical circuit structure according to claim 3, **characterised in that** the N-1 cross-connect-wavelength multiplex signals (CC-WDM1 ... CC-WDMN) are generated by means of N optical 1:(N-1)-splitter units, to which the respective receive-wavelength multiplex signal (R-WDM1 ... R-WDMN) of a remote port (RP1 ... RPN) is fed.

5. An optical circuit structure according to one of the preceding claims, **characterised in that** the number M of the local ports (LP1 ... LPN ) is equal to the number N of the remote ports (RP1 ... RPN).

6. An optical circuit structure according to claim 5 with reference back to claim 3, **characterised in that** the N-1 cross-connect-wavelength multiplex signals (CC-WDM1 ... CC-WDMN) are generated by means of N optical 1:N splitter units, to which in each case the receive-wavelength multiplex signal (R-WDM1 ... R-WDMN) of a remote port (RP1 ... RPN) is fed.

7. An optical circuit structure according to one of the preceding claims, **characterised in that** the receive-wavelength multiplex signal (R-WDM1 ... R-WDMN) of the assigned remote port (RP1 ... RPN) that is fed to a local port (LP1 ... LPN) is demultiplexed by means of a wavelength demultiplex unit into the individual drop-channels.

8. An optical circuit structure according to one of the preceding claims, **characterised in that** the optical splitter unit (110) for combining the partial transmit-wavelength multiplex signals is set up in the manner of a cascade from a plurality of optical lower order splitter units, preferably of optical 2:1-splitter units (116).

9. An optical expander circuit structure (114) for expanding an optical circuit structure for realizing an at least second order node to form an optical circuit structure according to one of the preceding claims,
(a) wherein the optical circuit structure for the realization of the second order node for each of the two remote ports has an optical base circuit structure (112) which comprises a 1:2-splitter unit (3) for generating the drop-channels and the cross-connect-wavelength multiplex signal (CC-WDM1 ... CC-WDM2) from the receive-wavelength multiplex signal (R-WDM1, R-WDM2) of the relevant remote port (RP1, RP2) for the other respective remote port (RP1, RP2) and also an add-unit (7) to which the add-channels for the relevant remote port (RP1, RP2) and the cross-connect-wavelength multiplex signal (CC-WDM1 ... CC-WDM2) is fed and which generates herefrom the transmit-wavelength multiplex signal (T-WDM1, T-WDM2) for the relevant remote port (RP1, RP2),
**characterised**
(b) **in that** the expander circuit structure (114) has a combination (106) of an add-unit and a demultiplex unit for the generation of the transmit-wavelength multiplex signal or a partial transmit-wavelength multiplex signal, wherein a first of the cross-connect-wavelength multiplex signals (CC-WDM1 ... CC-WDMN) is fed to the input port of the add-unit and a second of the cross-connect-wavelength multiplex signals (CC-WDM1 ... CC-WDMN) is fed to the input port of the demultiplex unit, wherein the channels generated by the demultiplex unit on the output side are in each case fed to a second input port of the 2x1-switches (11),
(c) **in that** the expander circuit structure (114) comprises an optical 2:1-splitter unit (116), with an input port of the splitter unit being connected to the output port of the add-unit, and
(d) **in that** the expander circuit structure comprises an optical 1:3-splitter unit (118).

10. An optical circuit structure for a node of the order three or four with use of optical expander circuit structures according to claim 9,
**characterised**
(a) **in that** for each of the three or four remote ports (RP1 ... RP4) of the optical circuit structure an optical base circuit structure (112) and an optical expander circuit structure (114) according to claim 9 is provided,
(b) **in that** for the generation of the transmit-wavelength multiplex signal (T-WDM1 ... T-WDM4) for each remote port (RP1 ... RP4)
(i) a first cross-connect-wavelength multiplex signal (CC-WDM1 ... CC-WDM4) and, if present in the relevant node, also the add-channels of the relevant local port (LP1 ... LP4) are fed to the add-unit (7) of the base circuit structure (112),
(ii) a second cross-connect-wavelength multiplex signal (CC-WDM1 ... CC-WDM4) is fed to the input port of the add-unit or the input port of the demultiplex unit of the expander circuit structure (114), and
(iii)in the case of a fourth order node a third cross-connect-wavelength multiplex signal (CC-WDM1 ... CC-WDM4) is fed to the input port of the demultiplex unit or the input port of the add-unit of the expander circuit structure, and
(iv) the output port of the add-unit (7) of the base circuit structure (112) is connected to an input port of the 2:1-splitter unit (116) of the expander circuit structure (114),
(v) wherein the transmit-wavelength multiplex signal (T-WDM1 ... T-WDM4) for the relevant remote port (RP1 ... RP4) is applied at the output port of the 2:1-splitter unit (116),
(c) **in that** the output port of the 1:2-splitter unit (3) of the base circuit structure (112) is connected to the input port of the 1:3-splitter unit (118) of the expander circuit structure (114), and
(d) **in that** the cross-connect-wavelength multiplex signal (CC-WDM1 ... CC-WDM4) generated at the output ports of the 1:3-splitter unit (118) of the expander circuit structure is in each case guided in the direction of the other remote ports (RP1 ... RP4).

11. An optical circuit structure for a node of the order five or six with use of optical expander circuit structures according to claim 9,
**characterised**
(a) **in that** the circuit structure for a fourth order node according to claim 10 for the creation of the one or the two additional remote ports (RP5, RP6) per additional remote port (RP5, RP6) is in the first instance supplemented by one base circuit structure (112) and one expander circuit structure (114), wherein the circuit structure for each remote port (RP1 ... RP6) corresponds to the circuit structure per remote port (RP1 ... RP6) of the circuit structure according to claim 10, and
(b) **in that** the thus expanded circuit structure for each remote port (RP1 ... RP6) is supplemented by a second expander circuit structure (114),
(c) **in that** in order to generate the transmit-wavelength multiplex signal (T-WDM1 ... T-WDM6) for each remote port (RP1 ... RP6) at the output port of the 2:1-splitter unit (116) of the second expander circuit structure (114),
(i) the output port of the 2:1-splitter unit (116) of the first expander circuit structure (114) is connected to the input port of the 2:1-splitter unit (116) of the second expander circuit structure (114) and the transmit-wavelength multiplex signal of the circuit structure according to claim 10 is correspondingly used as the partial transmit-wavelength multiplex signal,
(ii) a fourth cross-connect-wavelength multiplex signal (CC-WDM5, CC-WDM6) is fed to the input port of the add-unit or the input port of the demultiplex unit of the second expander circuit structure (114), and
(iii)in the case of a sixth order node a fifth cross-connect-wavelength multiplex signal (CC-WDM5, CC-WDM6) is fed to the input port of the demultiplex unit or the input port of the add-unit of the second expander circuit structure (114), and
(d) **in that** an output port of the 1:3-splitter unit (118) of the first expander circuit structure (114) is connected to the input port of the 1:3-splitter unit (118) of the second expander circuit structure (114), and
(e) **in that** the cross-connect-wavelength multiplex signal (CC-WDM1 ... CC-WDM6) generated at the other two output ports of the 1:3-splitter unit (118) of the first expander circuit structure (114) and the three output ports of the 1:3-splitter unit (118) of the second expander circuit structure (114) is in each case guided in the direction of the other remote ports (RP1 ... RP6).

12. An optical circuit structure for a node of the order six plus 2n, where n is a whole natural number, with use of optical expander circuit structures according to claim 9, **characterised**
(a) **in that** the circuit structure according to claim 11 per additional order for the creation of the additional remote ports (RP7 ... RP(6+2n)) is in the first instance supplemented by one base circuit structure (112) and two expander circuit structures (114), wherein the circuit structure for each remote port (RP1 ... RP(6+2n)) corresponds to the structure per remote port of the circuit structure according to claim 11, and
(b) **in that** the thus expanded circuit structure for each remote port (RP1 ... RP(6+2n)) is supplemented by a number n of expander circuit structures (114) according to claim 9, wherein for each remote port (RP1 ... RP(6+2n)) in each case two successive expander circuit structures (114) are interconnected in a manner similar to the interconnection of the first and second expander circuit structure (114) of the circuit structure according to claim 11, and wherein the transmit-wavelength multiplex signal (T-WDM1 ... T-WDM(6+2n)) for each remote port (RP1 ... RP(6+2n)) is generated in a corresponding way at the output port of the 2:1-splitter unit (118) of the last added expander circuit structure (114).

13. An optical base circuit structure (122) for realizing a second order node that can be expanded in an uninterrupted manner to form an optical circuit structure according to one of claims 1 to 8,
(a) having a 2:1-splitter unit (116) and an optical add-unit (7), whose output port is connected to a first input port of the 2:1-splitter unit (116), wherein the second input port of the 2:1-splitter unit (116) remains unused in the case of the realization of a second order node, and wherein at the output port of the 2:1-splitter unit (116) the transmit-wavelength multiplex signal (T-WDM1, TWDM2) of the relevant port (RP1, RP2) is generated from the add-channels fed to the add-unit (7), if present in the relevant node, and the cross-connect-wavelength multiplex signal (T-WDM1, T-WDM2) fed to the input port of the add-unit (7),
(b) having a 1:2-splitter unit (3) to which the respective receive-wavelength multiplex signal (R-WDM1, R-WDM2) of the relevant remote port is fed, with the drop-channels being removed at an output port of the 1:2-splitter unit (3), and
(c) having a 1:m-splitter unit (118), whose input port is connected to the other output port of the 1:2-splitter unit, with m being a natural number greater than or equal to two, and wherein the cross-connect-wavelength multiplex signal (CC-WDM1 ... CC-WDMN) is generated at the output ports of the 1:m-splitter unit (118) for feeding to further remote ports (RP3 ... RPN).

14. An optical circuit structure for realizing a second order node, **characterised in that** an optical base circuit structure (122) according to claim 13 is provided for each of the two remote ports (RP1, RP2) of the circuit structure, and **in that** in each case the cross-connect-wavelength multiplex signal (CC-WDM1, CC-WDM2) generated at an output port of the 1:m splitter unit (118) of the one base circuit structure is fed to the input port of the add-unit (7) of the other respective base circuit structure (122).

15. An optical circuit structure for realizing a third or fourth order node, **characterised**
(a) **in that** a base circuit structure (122) according to claim 13 is added to an optical circuit structure according to claim 14 for each further remote port (RP3, RP4), wherein to each add-unit (7) of an added base circuit structure (122) there is fed the cross-connect-wavelength multiplex signal (CC-WDM1 ... CC-WDM4) generated at an output of the 1:m-splitter unit (118) of one of the other base circuit structures (122), and
(b) **in that** for each remote port (RP1 ... RP4) an expander circuit structure (124) is added, consisting of a combination (106) of a further add-unit which is combined with a demultiplex unit in such a way that the demultiplex output ports of the demultiplex unit are connected to the input ports of the 2x1-switches (11) of the add-unit, wherein the output port of the expander circuit structure (124) is connected to the free input port of the 2:1-splitter unit (116) of the base circuit structure (122),
(c) wherein for each remote port (RP1 ... RP4) to the input port of the add-unit and/or the input port of the demultiplex unit of the expander circuit structure (124) there is fed a second or third cross-connect-wavelength multiplex signal (CC-WDM1 ... CC-WDM4) from one of the output ports of the 1:m-splitter units (118) of the base circuit structures (122) of the other respective remote ports (RP1 ... RP4).

16. An optical circuit structure for realizing a node of the order N greater than or equal to 5,
**characterised**
(a) **in that** a base circuit structure (122) according to claim 13 is added to an optical circuit structure according to claim 14 in the first instance for each further remote port (RP5 .. RPN), wherein to each add-unit (7) of an added base circuit structure (122) there is fed the cross-connect-wavelength multiplex signal (CC-WDM1 ... CC-WDMN) that is generated at an output of the 1:m-splitter unit (118) of one of the other base circuit structures (122), and
(b) **in that** for each remote port (RP1 ... RPN) for each started pair of added remote ports (RP5 ... RPN) an expander circuit structure (124) is added, consisting of a combination (106) of a further add-unit which is combined with a demultiplex unit in such a way that the demultiplex output ports of the demultiplex unit are connected to the input ports of the 2x1-switches (11) of the add-unit, and
(c) **in that** for each of the remote ports (RP1 ... RPN) an n:1-splitter unit (116) is added, with the number n denoting the number of the started pairs of added remote ports (RP5 ... RPN),
(d) wherein for each remote port (RP1 ... RPN) all the output ports of the add-units of the added expander circuit structures (124) are connected to the input ports of the added n:1-splitter unit (116),
(e) wherein for each remote port (RP1 ... RPN) the output port of the added n:1-splitter unit (116) is fed to the second input port of the 2:1-splitter unit (116) of the base circuit structure (122),
(f) wherein for each remote port (RP1 ... RPN) in each case one of the cross-connect-wavelength multiplex signals (CC-WDM1 ... CC-WDMN) of the other respective remote ports (RP1 ... RPN) is fed to the input ports of the add-units and the input ports of the demultiplex units of the expander circuit structures, and
(g) wherein for each remote port (RP1 ... RPN) in order to generate the cross-connect-wavelength multiplex signal (CC-WDM1 ... CC-WDMN) for the other respective remote ports (RP1 ... RPN) the 1:m-splitter unit (118) of the relevant base circuit structure (122) is expanded to form a 1:(N-1)-splitter unit, preferably by connecting the output ports of the 1:m-splitter unit (118) to further splitter units which have the required number of output ports.

## Revendications

1. Structure de circuit optique pour réaliser un noeud d'ordre supérieur dans un réseau de transmission optique, comprenant :
(a) un nombre N de ports distants bidirectionnels (RP1 ... RPN), dans laquelle peut être acheminé à chaque port distant (RP1 ... RPN) un signal optique de réception multiplexé en longueur d'onde (R-WDM1 ... R-WDMN) au moyen d'un ensemble de canaux optiques de réception et dans laquelle chaque port distant (RP1 ... RPN) peut délivrer un signal optique d'émission multiplexé en longueur d'onde (T-WDM1 ... T-WDMN) au moyen d'un ensemble de canaux optiques d'émission, dans laquelle une longueur d'onde optique moyenne est affectée à chaque canal de réception ou à chaque canal d'émission et dans laquelle le nombre N est supérieur ou égal à trois,
(b) un nombre M de ports locaux bidirectionnels (LP1 ... LPN), M étant supérieur ou égal à un et inférieur ou égal à N, chaque port local (LP1 ... LPN) étant affecté exactement à un port distant déterminé (RP1 ... RPN) et un ou plusieurs canaux optiques d'insertion pouvant être acheminé(s) à chaque port local (LP1 ... LPN) et un ou plusieurs canaux optiques d'extraction pouvant être délivré(s) par chaque port local (LP1 ... LPN),
(c) des moyens optiques à canaux d'extraction (102) pour acheminer tous les canaux optiques ou des canaux optiques choisis d'un signal de réception multiplexé en longueur d'onde (R-WDM1 ... R-WDMN) acheminé à un certain port distant (RP1 ... RPN) sous forme de canaux d'extraction au port local concerné (LP1out ... LPNout),
(d) des moyens optiques d'insertion et d'interconnexion (7, 106) qui sont conformés et configurables de sorte que, pour générer le signal d'émission multiplexé en longueur d'onde (T-WDM1 ... T-WDMN) pour chacun des N ports distants (RP1 ... RPN), des canaux de réception déterminés soient respectivement extraits des signaux de réception multiplexés en longueur d'onde (R-WDM1 ... R-WDMN) d'une pluralité ou de la totalité de tous les autres ports distants (RP1 ... RPN) sous forme de canaux de transfert et regroupés conjointement avec les canaux d'insertion acheminés à ce port distant (RP1 ... RPN) en signal d'émission multiplexé en longueur d'onde (T-WDM1 ... T-WDMN) qui peut être délivré par le port distant concerné (RP1 ... RPN), **caractérisée en ce que**
(e) les moyens optiques à canaux d'extraction (102) et les moyens optiques d'insertion et d'interconnexion (7, 106) comprennent exclusivement des unités optiques de division (102), des unités optiques de démultiplexage et des unités optiques d'insertion (7),
(f) dans laquelle une unité optique d'insertion (7) présente une unité optique de démultiplexage en longueur d'onde (9) connectée à un port d'entrée (7a) pour un signal multiplexé en longueur d'onde, une unité de démultiplexage en longueur d'onde (15) connectée à un port de sortie (7b) pour un signal multiplexé en longueur d'onde et des commutateurs optiques 2x1 (11), dans laquelle les ports de sortie des canaux conduisant aux canaux individuels de l'unité de démultiplexage en longueur d'onde (9) sont respectivement connectés à un premier port d'entrée de, respectivement, l'un des commutateurs optiques 2x1(11), dans laquelle un autre canal individuel peut être acheminé respectivement à un deuxième port d'entrée des 2x1commutateurs optiques de sorte que chacun des 2x1 commutateurs optiques (11) permette d'acheminer le canal de démultiplexage concerné ou l'autre canal concerné, via le port de sortie du 2x1 commutateur (11), au port d'entrée du canal concerné de l'unité de multiplexage en longueur d'onde (15), ce qui a pour effet de générer au port de sortie (7b) un signal multiplexé en longueur d'onde combiné de manière correspondante,
(g) la structure de circuit présente des unités optiques de division de puissance (102) et, pour générer les canaux d'extraction pour chacun des M ports locaux (LP1 ... LPN), un signal partiel généré à l'aide d'une unité optique de division de puissance (102) à partir du signal de réception multiplexé en longueur d'onde (R-WDM1 ... R-WDMN) du port distant respectivement affecté (RP1 ... RPN) est acheminé au port local concerné (LP1 ... LPN),
(h) pour générer chaque signal d'émission multiplexé en longueur d'onde (T-WDM1 ... T-WDMN) pour un port distant déterminé (RP1 ... RPN), des signaux partiels générés au moyen respectivement d'une des unités optiques de division de puissance (102) à partir des signaux de réception multiplexés en longueur d'onde de la pluralité ou de la totalité des autres ports distants (RP1 ... RPN) sous forme de signaux d'interconnexion multiplexés en longueur d'onde (CC-WDM1 ... CC-WDMN) sont acheminés en direction du port distant déterminé et les canaux d'insertion qui sont acheminés à un port local affecté au port distant déterminé, sont dirigés en direction du port distant déterminé,
(i) la structure de circuit est réalisée de sorte qu'en fonction du nombre des signaux d'interconnexion multiplexés en longueur d'onde (CC-WDM1 ... CC-WDMN), un ou plusieurs signaux partiels d'émission multiplexés en longueur d'onde soit ou soient générés pour le port distant déterminé (RP1 ... RPN) conformément à l'une ou plusieurs des possibilités suivantes :
(i) respectivement deux des signaux d'interconnexion multiplexés en longueur d'onde (CC-WDM1 ... CC-WDMN) sont regroupés au moyen d'une combinaison (106) d'une unité d'insertion (7) et d'une unité de démultiplexage en un signal partiel d'émission multiplexé en longueur d'onde, un des signaux d'interconnexion multiplexés en longueur d'onde (CC-WDM1 ... CC-WDMN) étant acheminé au port d'entrée de l'unité d'insertion (7) et l'autre des signaux d'interconnexion multiplexés en longueur d'onde (CC-WDM1 ... CC-WDMN) étant acheminé à l'entrée de l'unité de démultiplexage, les canaux générés du côté sortie de l'unité de démultiplexage étant respectivement acheminés au deuxième port d'entrée des 2x 1 commutateurs (11) ;
(ii) un signal d'interconnexion multiplexé en longueur d'onde (CC-WDM1 ... CC-WDMN) et/ou les canaux d'insertion existants sont regroupés au moyen d'une unité d'insertion (7) en un signal partiel d'émission multiplexé en longueur d'onde ;
(iii) un seul signal d'interconnexion multiplexé en longueur d'onde (CC-WDM1 ... CC-WDMN) est converti au moyen d'une unité d'insertion (7) en un signal partiel d'émission multiplexé en longueur d'onde ; et
(j) la structure de circuit présente une unité optique de division (110) et la pluralité de signaux partiels d'émission multiplexés en longueur d'onde sont combinés à l'aide de l'unité optique de division (110) en signal d'émission multiplexé en longueur d'onde (T-WDM1 ... T-WDMN) qui peut être délivré par le port distant déterminé (RP1 ... RPN).

2. Structure de circuit optique selon la revendication 1, **caractérisée en ce que** les unités optiques d'insertion (7) présentent respectivement une structure identique, dans laquelle le nombre et la position spectrale des canaux sont identiques à ceux des unités de démultiplexage (9) comprises dans les unités d'insertion (7).

3. Structure de circuit optique selon la revendication 1 ou 2, **caractérisée en ce que** les signaux de réception multiplexés en longueur d'onde (R-WDM1 ... R-WDMN) de tous les autres ports distants (RP1 ... RPN) sont utilisés comme signal d'interconnexion multiplexé en longueur d'onde (CC-WDM1 ... CC-WDMN) pour générer le signal d'émission multiplexé en longueur d'onde (T-WDM1 ... T-WDMN) pour un port distant déterminé (RP1 ... RPN).

4. Structure de circuit optique selon la revendication 3, **caractérisée en ce que** les N-1 signaux d'interconnexion multiplexés en longueur d'onde (CC-WDM1 ... CC-WDMN) sont générés à l'aide de N unités optiques de division 1:(N-1), auxquelles est respectivement acheminé le signal de réception multiplexé en longueur d'onde (R-WDM1 ... R-WDMN) d'un port distant (RP1 ... RPN).

5. Structure de circuit optique selon l'une quelconque des revendications précédentes, **caractérisée en ce que** le nombre M des ports locaux (LP1 ... LPN) est identique au nombre N des ports distants (RP1 ... RPN).

6. Structure de circuit optique selon la revendication 5, **caractérisée en ce que** les N-1 signaux d'interconnexion multiplexés en longueur d'onde (CC-WDM1 ... CC-WDMN) sont générés à l'aide de N unités optiques de division 1:(N-1), auxquelles est respectivement acheminé le signal de réception multiplexé en longueur d'onde (R-WDM1 ... R-WDMN) d'un port distant (RP1 ... RPN).

7. Structure de circuit optique selon l'une quelconque des revendications précédentes, **caractérisée en ce que** le signal de réception multiplexé en longueur d'onde (R-WDM1 ... R-WDMN) du port distant affecté (RP1 ... RPN) acheminé à un port local (LP1 ... LPN) est démultiplexé au moyen d'une unité de démultiplexage en longueur d'onde en canaux individuels d'extraction.

8. Structure de circuit optique selon l'une quelconque des revendications précédentes, **caractérisée en ce que** l'unité optique de division (110) est constituée, en cascade, de plusieurs unités optiques de division d'ordre inférieur, de préférence d'unités optiques de division 2:1 (116) pour regrouper les signaux partiels d'émission multiplexés en longueur d'onde.

9. Structure de circuit optique d'extension (114) pour étendre une structure de circuit optique en vue de réaliser un noeud au moins de deuxième ordre pour obtenir une structure de circuit optique selon l'une quelconque des revendications précédentes,
(a) dans laquelle la structure de circuit optique présente, pour la réalisation du noeud de deuxième ordre pour chacun des deux ports distants, une structure de circuit optique de base (112) qui comprend une unité de division 1:2 (3) pour générer les canaux d'extraction et le signal d'interconnexion multiplexé en longueur d'onde (CC-WDM1, CC-WDM2) à partir du signal de réception multiplexé en longueur d'onde (R-WDM1, R-WDM2) du port distant concerné (RP1, RP2) pour l'autre port distant respectif (RP1, RP2) ainsi qu'une unité d'insertion (7), à laquelle sont acheminés les canaux d'insertion et le signal d'interconnexion multiplexé en longueur d'onde (CC-WDM1, CC-WDM2) pour le port distant concerné (RP1, RP2) et qui génère, à partir de ceux-ci, le signal d'émission multiplexé en longueur d'onde (T-WDM1, T-WDM2) pour le port distant concerné (RP1, RP2),
**caractérisée en ce que**
(b) la structure de circuit d'extension (114) présente une combinaison (106) d'une unité d'insertion et d'une unité de démultiplexage pour générer le signal d'émission multiplexé en longueur d'onde ou un signal partiel d'émission multiplexé en longueur d'onde, dans laquelle un premier des signaux d'interconnexion multiplexés en longueur d'onde (CC-WDM1 ... CC-WDMN) est acheminé au port d'entrée de l'unité d'insertion et un deuxième des signaux d'interconnexion multiplexés en longueur d'onde (CC-WDM1 ... CC-WDMN) est acheminé au port d'entrée de l'unité de démultiplexage, les canaux générés du côté sortie par l'unité de démultiplexage étant respectivement acheminés à un deuxième port d'entrée des 2x1 commutateurs (11),
(c) la structure de circuit d'extension (114) comprend une unité optique de division 2:1 (116), un port d'entrée de l'unité de division étant connecté au port de sortie de l'unité d'insertion, et
(d) la structure de circuit d'extension comprend une unité optique de division 1:3 (118).

10. Structure de circuit optique pour un noeud de troisième ou quatrième ordre en utilisant des structures optiques de circuit d'extension selon la revendication 9, **caractérisée en ce que,**
(a) pour chacun des trois ou quatre ports distants (RP1 ... RP4) de la structure de circuit optique, il est prévu une structure de circuit optique de base (112) et une structure de circuit optique d'extension (114) selon la revendication 9,
(b) pour générer le signal d'émission multiplexé en longueur d'onde (T-WDM1 ... T-WDM4) pour chaque port distant (RP1 ... RP4)
(i) un premier signal d'interconnexion multiplexé en longueur d'onde (CC-WDM1 ... CC-WDM4) et, dans le cas où ils sont présents dans le noeud concerné, également les canaux d'insertion du port local concerné (LP1 ... LP4), sont acheminés à l'unité d'insertion (7) de la structure de circuit de base (112),
(ii) un deuxième signal d'interconnexion multiplexé en longueur d'onde (CC-WDM1 ... CC-WDM4) est acheminé au port d'entrée de l'unité d'insertion ou au port d'entrée de l'unité de démultiplexage de la structure de circuit d'extension (114), et,
(iii) dans le cas d'un noeud de quatrième ordre, un troisième signal d'interconnexion multiplexé en longueur d'onde (CC-WDM1 ... CC-WDM4) est acheminé au port d'entrée de l'unité de démultiplexage ou au port d'entrée de l'unité d'insertion de la structure de circuit d'extension, et
(iv) le port de sortie de l'unité d'insertion (7) de la structure de circuit de base (112) est connecté à un port d'entrée de l'unité de division 2:1 (116) de la structure de circuit d'extension (114),
(v) dans laquelle le signal d'émission multiplexé en longueur d'onde (T-WDM1 ... T-WDM4) pour le port distant concerné (RP1 ... RP4) est présent au port de sortie de l'unité de division 2:1 (116),
(c) le port de sortie de l'unité de division 1:2 (3) de la structure de circuit de base (112) est connecté au port d'entrée de l'unité de division 1:3 (118) de la structure de circuit d'extension (114), et
(d) le signal d'interconnexion multiplexé en longueur d'onde (CC-WDM1 ... CC-WDM4) généré aux ports de sortie de l'unité de division 1:3 (118) de la structure de circuit d'extension est respectivement acheminé en direction des autres ports distants (RP1 ... RP4).

11. Structure de circuit optique pour un noeud de cinquième ou sixième ordre en utilisant des structures optiques de circuit d'extension selon la revendication 9, **caractérisée en ce que**
(a) la structure de circuit pour un noeud de quatrième ordre selon la revendication 10 pour créer le ou les deux ports distants supplémentaires (RP5, RP6) par port distant supplémentaire (RP5, RP6) est d'abord complétée par une structure de circuit de base (112) et par une structure de circuit d'extension (114), la structure de circuit pour chaque port distant (RP1 ... RP6) correspondant à la structure de circuit par port distant (RP1 ... RP6) de la structure de circuit selon la revendication 10, et
(b) la structure de circuit étendue pour chaque port distant (RP1 ... RP6) est complétée par une deuxième structure de circuit d'extension (114),
(c) pour générer le signal d'émission multiplexé en longueur d'onde (T-WDM1 ... T-WDM6) pour chaque port distant (RP1 ... RP6) au port de sortie de l'unité de division 2:1 (116) de la deuxième structure de circuit d'extension (114),
(i) le port de sortie de l'unité de division 2:1 (116) de la première structure de circuit d'extension (114) est connecté au port d'entrée de l'unité de division 2:1 (116) de la deuxième structure de circuit d'extension (114) et, par conséquent, le signal d'émission multiplexé en longueur d'onde de la structure de circuit selon la revendication 10 est utilisé comme signal partiel d'émission multiplexé en longueur d'onde,
(ii) un quatrième signal d'interconnexion multiplexé en longueur d'onde (CC-WDM5, CC-WDM6) est acheminé au port d'entrée de l'unité d'insertion ou au port d'entrée de l'unité de démultiplexage de la deuxième structure de circuit d'extension (114), et,
(iii) dans le cas d'un noeud de sixième ordre, un cinquième signal d'interconnexion multiplexé en longueur d'onde (CC-WDM5, CC-WDM6) est acheminé au port d'entrée de l'unité de démultiplexage ou au port d'entrée de l'unité d'insertion de la deuxième structure de circuit d'extension (114), et
(d) un port de sortie de l'unité de division 1:3 (118) de la première structure de circuit d'extension (114) est connecté au port d'entrée de l'unité de division 1:3 (118) de la deuxième structure de circuit d'extension (114), et
(e) le signal d'interconnexion multiplexé en longueur d'onde (CC-WDM1 ... CC-WDM6) généré aux deux autres ports de sortie de l'unité de division 1:3 (118) de la première structure de circuit d'extension (114) et aux trois ports de sortie de l'unité de division 1:3 (118) de la deuxième structure de circuit d'extension (114) est acheminé respectivement en direction des autres ports distants (RP1 .... RP6).

12. Structure de circuit optique pour un noeud d'ordre six plus 2n, n étant un nombre naturel entier, en utilisant des structures de circuit d'extension selon la revendication 9, **caractérisée en ce que**
(a) la structure de circuit selon la revendication 11 par ordre supplémentaire pour créer les ports distants supplémentaires (RP7 ... RP(6+2n)) est d'abord complétée par une structure de circuit de base (112) et par deux structures de circuit d'extension (114), la structure de circuit pour chaque port distant (RP1 ... RP(6+2n)) correspondant à la structure par port distant de la structure de circuit selon la revendication 11, et
(b) la structure de circuit étendue de la sorte pour chaque port distant (RP1 ... RP(6+2n)) est complétée par un nombre n de structures de circuit d'extension (114) selon la revendication 9, dans laquelle, pour chaque port distant (RP1 ... RP(6+2n)) deux structures de circuit d'extension successives (114) sont câblées de manière analogue au câblage des première et deuxième structures de circuit d'extension (114) de la structure de circuit selon la revendication 11 et dans laquelle le signal d'émission multiplexé en longueur d'onde (T-WDM1 ... T-WDM(6+2n)) pour chaque port distant (RP1 ... RP(6+2n)) est généré de manière correspondante au port de sortie de l'unité de division 2:1 (118) de la dernière structure de circuit d'extension ajoutée (114).

13. Structure de circuit optique de base (122) pour réaliser un noeud de deuxième ordre qui peut être étendu sans interruption à une structure de circuit optique selon l'une quelconque des revendications 1 à 8, comprenant :
(a) une unité de division 2:1 (116) et une unité d'insertion optique (7), dont le port de sortie est connecté à un premier port d'entrée de l'unité de division 2:1 (116), le deuxième port d'entrée de l'unité de division 2:1 (116) restant inutilisé dans le cas de la réalisation d'un noeud de deuxième ordre et dans laquelle le signal d'émission multiplexé en longueur d'onde (T-WDM1, T-WDM2) du port concerné (RP1, RP2) est généré au port de sortie de l'unité de division 2:1 (116) à partir des canaux d'insertion, s'il y en a dans le noeud concerné, acheminés à l'unité d'insertion (7) et à partir du signal d'interconnexion multiplexé en longueur d'onde (T-WDM1, T-WDM2) acheminé au port d'entrée de l'unité d'insertion (7),
(b) une unité de division 1:2 (3), à laquelle est acheminé le signal de réception multiplexé en longueur d'onde (R-WDM1, R-WDM2) du port distant concerné, les canaux d'extraction étant délivrés à un port de sortie de l'unité de division 1:2 (3), et
(c) une unité de division 1:m (118), dont le port d'entrée est connecté à l'autre port de sortie de l'unité de division 1:2, m étant un nombre naturel supérieur ou égal à deux, et le signal d'interconnexion multiplexé en longueur d'onde (CC-WDM1 ... CC-WDMN) étant généré aux ports de sortie de l'unité de division 1:m (118) pour être acheminé à d'autres ports distants (RP3 ... RPN).

14. Structure de circuit optique pour réaliser un noeud de deuxième ordre, **caractérisée en ce que,** pour chacun des deux ports distants (RP1, RP2) de la structure de circuit, il est prévu une structure de circuit optique de base (122) selon la revendication 13 et le signal d'interconnexion multiplexé en longueur d'onde (CC-WDM1, CC-WDM2) respectif généré à un port de sortie de l'unité de division 1:m (118) de la première structure de circuit de base est acheminé au port d'entrée de l'unité d'insertion (7) de l'autre structure de circuit de base respective (122).

15. Structure de circuit optique pour réaliser un noeud de troisième ou de quatrième ordre, **caractérisée en ce que**
(a) l'on ajoute une structure de circuit de base (122) selon la revendication 13 à une structure de circuit optique selon la revendication 14 pour chaque autre port distant (RP3, RP4), le signal d'interconnexion multiplexé en longueur d'onde (CC-WDM1 ... CC-WDM4) généré à une sortie de l'unité de division 1:m (118) d'une des autres structures de circuit de base (122) étant acheminé à chaque unité d'insertion (7) d'une structure de circuit de base ajoutée (122), et,
(b) pour chaque port distant (RP1 ... RP4), on ajoute une structure de circuit d'extension (124) constituée d'une combinaison (106) d'une autre unité d'insertion qui est combinée à une unité de démultiplexage de sorte que les ports de sortie de démultiplexage de l'unité de démultiplexage soient connectés aux ports d'entrée des 2x1 commutateurs (11) de l'unité d'insertion, le port de sortie de la structure de circuit d'extension (124) étant connecté au port d'entrée libre de l'unité de division 2:1 (116) de la structure de circuit de base (122),
(c) dans laquelle, pour chaque port distant (RP1 ... RP4), un deuxième ou un troisième signal d'interconnexion multiplexé en longueur d'onde (CC-WDM1 ... GC-WDM4) est acheminé au port d'entrée de l'unité d'insertion et/ou au port d'entrée de l'unité de démultiplexage de la structure de circuit d'extension (124) par un des ports de sortie des unités de division 1:m (118) des structures de circuit de base (122) des autres ports distants respectifs (RP1 ... RP4).

16. Structure de circuit optique pour réaliser un noeud d'ordre N, supérieur ou égal à 5, **caractérisée en ce que**
(a) l'on ajoute d'abord une structure de circuit de base (122) selon la revendication 13 à une structure de circuit optique selon la revendication 14 pour chaque autre port distant (RP5 ... RPN), le signal d'interconnexion multiplexé en longueur d'onde (CC-WDM1 ... CC-WDMN) généré à une sortie de l'unité de division 1:m (118) d'une des autres structures de circuit de base (122) étant acheminé à chaque unité d'insertion (7) d'une structure de circuit de base ajoutée (122), et,
(b) pour chaque port distant (RP1 ... RPN) pour chaque paire initiée de ports distants ajoutés (RP5 ... RPN) est ajoutée une structure de circuit d'extension (124) constituée d'une combinaison (106) d'une autre unité d'insertion qui est combinée à une unité de démultiplexage de sorte que les ports de sortie de démultiplexage de l'unité de démultiplexage soient connectés aux ports d'entrée des 2x 1 commutateurs (11) de l'unité d'insertion, et,
(c) pour chacun des ports distants (RP1 ... RPN), on ajoute une unité de division n:1 (116), dans laquelle le nombre n désigne le nombre des paires initiées de ports distants ajoutés (RP5 ... RPN),
(d) dans laquelle, pour chaque port distant (RP1 ... RPN), tous les ports de sortie des unités d'insertion des structures de circuit d'extension ajoutées (124) sont connectés aux ports d'entrée de l'unité de division n:1 ajoutée (116),
(e) dans laquelle, pour chaque port distant (RP1 ... RPN), le port de sortie de l'unité de division n:1 ajoutée (116) est acheminé au deuxième port d'entrée de l'unité de division 2:1 (116) de la structure de circuit de base (122),
(f) dans laquelle, pour chaque port distant (RP1 ... RPN), respectivement un des signaux d'interconnexion multiplexés en longueur d'onde (CC-WDM1 ... CC-WDMN) des autres ports distants respectifs (RP1 ... RPN) est acheminé aux ports d'entrée des unités d'insertion et aux ports d'entrée des unités de démultiplexage des structures de circuit d'extension, et
(g) dans laquelle, pour chaque port distant (RP1 ... RPN), pour générer le signal d'interconnexion multiplexé en longueur d'onde (CC-WDM1 ... CC-WDMN) pour les autres ports distants respectifs (RP1 ... RPN), l'unité de division 1:m (118) de la structure de circuit de base concernée (122) est étendue à une unité de division 1:(N-1), de préférence en connectant les ports de sortie de l'unité de division 1:m (118) à d'autres unités de division qui présentent le nombre requis de ports de sortie.
